# EUROPÄISCHE PATENTSCHRIFT

(11) **EP 3 305 128 B1**
(45) Veröffentlichungstag und Bekanntmachung des Hinweises auf die Patenterteilung: **26.01.2022**
(21) Anmeldenummer: 17196007.3
(22) Anmeldetag: 09.03.2011
(51) Int. Cl.: A46B 3/16, A46B 9/04

(54) **ZAHNBÜRSTE MIT BORSTENBÜNDELN UND VERFAHREN ZUM HERSTELLEN SOLCHER ZAHNBÜRSTEN**
TOOTHBRUSH COMPRISING BUNCHES OF BRISTLES AND METHOD FOR PRODUCING SUCH TOOTHBRUSHES
BROSSE À DENTS DOTÉE DE FAISCEAUX DE SOIES ET PROCÉDÉ DE FABRICATION D'UNE TELLE BROSSE À DENTS

(30) Priorität: 18.08.2010 EP 10008599
(43) Veröffentlichungstag der Anmeldung: 11.04.2018
(62) Teilanmeldung aus: 11708407.9
(73) Patentinhaber: Trisa Holding AG, 6234 Triengen (CH)
(72) Erfinder: HESS, Walter, 6006 Luzern (CH); STEINMANN, Patrik, 5735 Pfeffikon (CH)
(74) Vertreter: Schaad, Balass, Menzl & Partner AG

(56) Entgegenhaltungen:
- WO-A1-2008/081697
- WO-A1-2009/084637
- JP-A- 2000 050 958
- JP-A- 2000 296 024
- KR-A- 20020 085 464
- US-A- 5 500 975

## Beschreibung

Die vorliegende Erfindung betrifft eine Zahnbürste gemäss dem Oberbegriff des Anspruchs 1 sowie ein Verfahren zur Herstellung einer Zahnbürste gemäss dem Oberbegriff des Anspruchs 15.

Zahnbürsten weisen üblicherweise einen Bürstenkopf mit einem aus Borstenbündeln gebildeten Borstenfeld auf. Derartige Zahnbürsten sind seit langem bekannt. Die Borstenfelder solcher Zahnbürsten wurden im Laufe der Zeit in mannigfacher Weise gestaltet beziehungsweise weiterentwickelt, um einerseits die Reinigungswirkung und andererseits den Komfort für die Anwender zu verbessern. Eine dieser Entwicklungen betrifft die Verwendung von profilierten Borstenfeldern sowie von Borstenbündeln mit im Borstenbündel unterschiedlich weit hochstehenden Borsten.

Die Druckschrift US 5,926,897 offenbart eine Zahnbürste mit einem aus Borstenbündeln bestehenden Borstenfeld. Dieses Borstenfeld ist profiliert ausgestaltet und die einzelnen Borstenbündel weisen eine Anzahl von höherstehenden Borsten auf, die eine höherstehende Endfläche bilden.

Die Druckschrift DE 198 32 436 beschreibt ein Verfahren zum Herstellen von Bürsten, insbesondere Zahnbürsten. Das Verfahren zeigt die Bearbeitung von Borstenbündeln mit unterschiedlich langen Borsten auf, wobei die Bearbeitung der Borsten in verschiedenen Schritten mittels seitlicher Auslenkung durchgeführt wird.

Das US Design 425,306 zeigt ein ornamentales Borstenfeld mit im Wesentlichen dreiecksförmigen Borstenbündeln, an deren Ecken höherstehende Borsten angeordnet sind.

Die Druckschrift EP 1 425 989 offenbart Zahnbürsten mit zugespitzten Borsten sowie ein Verfahren zur Herstellung derselben. Die Borsten können dabei zwei gleiche zugespitzte Enden oder unterschiedliche, das heisst je ein nicht zugespitztes und ein zugespitztes Ende aufweisen.

Die Druckschrift WO 2009/000903 beschreibt eine Zahnbürste mit Borstenbündeln, welche einerseits kürzere nicht zugespitzte Borsten und andererseits längere zugespitzte Borsten aufweisen. Die längeren Borsten können im Borstenbündeln zufällig verteilt oder in einer inneren Region des Borstenbündels zentral angeordnet sein.

Aus der WO 2008/081697 A1 ist eine Zahnbürste bekannt, die mit verschiedenen funktionellen Eigenschaften einer Zahnbürste kompatibel ist, ein ansprechendes Aussehen aufweist sowie einen hohen Grad an gestalterischer Freiheit. Die Zahnbürste umfasst eine Kopfeinheit mit einer Vielzahl von Borstenbündellöchern, die in ihrer Kopfoberfläche vorgesehen sind, wobei ein Borstenbündel in zwei Hälften gefaltet wird und ein dazwischen gehaltener Draht in das Borstenbündelloch eingetrieben wird, wodurch das Borstenbündel in das Borstenbündelloch eingebracht wird. An der Kopffläche der Kopfeinheit ist eine Borstenbündelgruppe aus mindestens drei Borstenbündeln vorgesehen und in jedem der Borstenbündel, welche die Borstenbündelgruppe bilden, ist die Ausrichtung des Drahtes derart eingestellt, dass ein eingeschlossener Bereich durch die Verlängerungslinie jedes Drahts geteilt wird oder dass ein zwischen den Verlängerungslinien der Drähte gehaltener Bereich geschnitten wird.

WO2009/084637A1 offenbart eine Zahnbürste mit den Merkmalen des Oberbegriffs des Anspruchs 1 und ein Verfahren zur Herstellung einer Zahnbürste mit den Merkmalen des Oberbegriffs des Anspruchs 15.

Aus dem Stand der Technik sind vielfältige Bemühungen bekannt, Zahnbürsten mit einem Borstenfeld zur Verfügung zu stellen, das Borsten mit unterschiedlich hochstehenden Borstenenden in einem Borstenbündel aufweist. Die entsprechenden Verfahren sind jedoch aufwendig oder lassen nur eine eingeschränkte Gestaltung des Borstenfeldes zu. Der vorliegenden Erfindung liegt daher die Aufgabe zugrunde, eine Zahnbürste mit verbesserter Reinigungswirkung, insbesondere der Zahnzwischenräume, bei möglichst einfacher und prozesssicherer Herstellung der Zahnbürste, zur Verfügung zu stellen.

Die Aufgabe wird mit einer Zahnbürste mit den Merkmalen des Anspruchs 1 und einem Verfahren mit den Merkmalen des Anspruchs 15 gelöst.

Vorteilhafte Ausführungsformen der vorliegenden Erfindung ergeben sich aus den abhängigen Ansprüchen, der Beschreibung und der Zeichnung.

Eine erfindungsgemässe Zahnbürste weist einen Handgriff und einen borstentragenden Kopfteil auf. Der Handgriff und der Kopfteil sind über einen Halsteil miteinander verbunden. Der Kopfteil trägt die Borsten und weist somit Borstenbündel auf, die ihrerseits eine Vielzahl von Borsten oder Borstenfilamente umfassen. Die Ausdrücke Borste, Filament oder Borstenfilament werden nachfolgend synonym verwendet und bezeichnen beide einen einzelnen Borstenfaden. Diese Borstenfäden werden mittels einem Extrusionsverfahren hergestellt und auf die richtige Länge zugeschnitten, bevor diese auf der Zahnbürste fixiert werden. Die Borstenfäden weisen aus diesem Grund in ihrem unbearbeiteten Zustand einen zylindrischen Querschnitt auf. Dieser Querschnitt ist meist kreisförmig, kann aber auch eine vom Kreis abweichende Form aufweisen.

Die Borsten beziehungsweise die Borstenbündel erstrecken sich bevorzugt in senkrechter Richtung vom Kopfteil weg. In einer alternativen Ausführungsform können sich die erfinderischen Borstenbündel auch in einem Winkel vom Kopf erstrecken. Mindestens zwei der Borstenbündel des Kopfteils umfassen mindestens eine Borste, die ein Borstenende aufweist, welches relativ zu den Borstenenden der übrigen Borsten des Borstenbündels höher steht. Die mindestens eine Borste mit dem höherstehenden Borstenende ist innerhalb des Borstenbündels nicht zentrisch angeordnet. Sind mehrere Borsten mit höherstehendem Borstenende vorhanden, sind auch diese nicht zentrisch innerhalb des sie umfassenden Borstenbündels angeordnet. Im Weiteren sind die mindestens zwei Borstenbündel, die mindestens eine Borste mit höherstehendem Borstenende umfassen, vorzugsweise auf gegenüberliegenden Seiten einer (gedachten) Mittellängsebene der Zahnbürste angeordnet.

Die (gedachte) Mittellängsebene steht rechtwinklig zur Borstenfläche im Kopf der Zahnbürste. Zudem verläuft die Mittellängsebene durch die Längsachse der Zahnbürste. Alle Borstenbündel des Kopfteils verlaufen vorzugsweise wenigstens annähernd parallel zur Mittellängsebene.

Die zwei oder mehr Borstenbündel, die mindestens eine Borste mit höherstehendem Borstenende aufweisen, sind auf den gegenüberliegenden Seiten der Mittellängsebene so angeordnet, dass eine Hälfte, die mindestens eine Borste mit höherstehendem Ende umfasst, zur Mittellängsebene hin orientiert ist. Alternativ ist auch die umgekehrte Anordnung möglich, sodass die höherstehenden Enden von der Mittellängsebene weg orientiert sind.

In einer alternativen Ausführungsform weist die Zahnbürste die folgenden Merkmale auf: Zahnbürste mit einem Handgriff und einem borstentragenden Kopfteil, die durch einen Halsteil miteinander verbunden sind, wobei das Kopfteil eine Vielzahl von aus Borsten bestehende Borstenbündel aufweist, wobei zwei oder mehr Borstenbündel mindestens eine Borste mit einem relativ zu den Borstenenden der anderen Borsten höherstehenden Borstenende aufweisen, wobei die mindestens eine Borste mit höherstehendem Borstenende innerhalb des Borstenbündels nicht zentrisch angeordnet ist, und wobei die zwei oder mehr Borstenbündel auf gegenüberliegenden Seiten einer Mittellängsebene der Zahnbürste angeordnet und alle Borstenbündel uniform mit einer die mindestens eine Borste mit höherstehendem Borstenende umfassenden Hälfte des Borstenbündels zur Mittellängsebene hin oder alternativ von ihr weg orientiert sind.

In einer bevorzugten Ausführungsform sind die Borstenbündel mittels eines Ankers am Kopfteil befestigt. Beborstungsverfahren, die Borstenbündel mittels Anker in entsprechenden Sacklöchern des Kopfteils befestigen, sind an sich bekannt. Mittels des Ankers werden die Borstenbündel symmetrisch oder asymmetrisch gefaltet und anschliessend in Sacklöchern fixiert. Durch die Faltung mittels des Ankers weist das Borstenbündel zwei Hälften (Borstenbündelhälften) auf, die je eines der Enden der gefalteten Borsten umfassen.

In einer weiteren bevorzugten Ausführungsform sind die Borsten mit höherstehendem Borstenende in der sie umfassenden Hälfte des Borstenbündels im Wesentlichen in einer Region dieser Hälfte angeordnet. Das heisst, die Borsten mit höherstehendem Borstenende sind nicht zufällig innerhalb der sie umfassenden Hälfte des Borstenbündels verteilt, sondern im Wesentlichen auf eine Region dieser Hälfte konzentriert. In dieser Region können auch Borsten vorhanden sein, die kein höherstehendes Borstenende aufweisen.

In einer bevorzugten Ausführungsform weisen alle Anker die gleiche Orientierung auf. Sie sind beispielsweise parallel zur Mittellängsebene ausgerichtet.

In einer anderen Ausführungsform weisen die Anker mindestens zwei Orientierungen auf. Ein Teil der Anker kann wiederum parallel zur Mittellängsebene orientiert sein, während ein anderer Teil der Anker nicht parallel zur Mittellängsebene ausgerichtet ist, sondern mit dieser Ebene einen Winkel bildet beziehungsweise einschliesst. Vorzugsweise ist dieser Winkel im Bereich von 0° bis 90°, besonders bevorzugt im Bereich von 0° bis 30°.

In einer bevorzugten Ausführungsform sind die zwei oder mehr Borstenbündel, die mindestens eine Borste mit höherstehendem Ende aufweisen, spiegelbildlich zur Mittellängsebene angeordnet.

In einer weiteren Ausführungsform sind die Anker im Wesentlichen senkrecht zur Längsachse der Zahnbürste orientiert. Das heisst, dass die Anker mit der Längsachse einen Winkel von 90° +/- 20°, vorzugsweise 90° +/- 10°, einnehmen. Dieser Winkel kann über die Borstenbündel einer Zahnbürste unterschiedlich sein. In dieser Ausführungsform ist es möglich, die höherstehenden Borstenenden in den Borstenbüscheln jeweils gleich zu orientieren. Die höherstehenden Borstenenden mindestens eines Bündels stehen somit jeweils im Wesentlichen entweder auf der Griffseite oder auf der freien Seite der Zahnbürste.

Weiter können die Borstenbündel reihenweise abwechselnd orientiert sein, d.h. die erste Reihe von Borstenbündel auf der Seite des freien Endes der Zahnbürste hat die tieferstehenden Borstenenden auf der Seite des freien Endes der Zahnbürste. Die nächste Reihe hat die höherstehenden Borstenenden auf der Seite des freien Endes der Zahnbürste. Auf diese Weise wird erreicht, dass die Interdentalpenetration verbessert wird. Die Abstände zwischen den Kämmen mit den höherstehenden Borstenenden wird grösser, sodass der Eingriff dieser besser wird. Diese Borstenbündel werden vorzugsweise nicht ausgedünnt.

Es entsteht somit vorzugsweise ein symmetrisches Bild der Borstenbündel gegenüber der Längsmittelachse der Zahnbürste.

Es ist auch möglich in einem Borstenfeld die aufgeführten Bündelorientierungen zu kombinieren.

In einer weiteren Ausführungsform werden einseitig zugespitzte Borsten verwendet. Diese werden aus zylindrischen Borsten hergestellt, indem diese in einem ersten Schritt vorzugsweise am Borstenstrang am freien Ende gerundet und anschliessend auf die richtige Länge zugeschnitten werden. Alternativ werden Borstenzuschnitte erst nach dem Schneiden vom Borstenstrang an einem Ende der Borsten gerundet.

Anschliessend werden sie auf dem dem gerundeten Ende gegenüberliegenden Ende zugespritzt und allenfalls eingefärbt. Danach können sie in eine Zahnbürste eingesetzt werden. Dabei bilden die zugespitzten Enden die höherstehenden Borstenenden und die gerundeten Enden die tieferstehenden Borstenenden. Die auf diese Weise hergestellten Borsten, beziehungsweise Borstenbündel werden nach dem verankern im Bürstenkopf vorzugsweise weder abgerundet noch ausgedünnt.

Bei einer besonders bevorzugten Zahnbürste mit einem Handgriff und einem borstentragenden Kopfteil, die durch einen Halsteil miteinander verbunden sind, weist das Kopfteil eine Vielzahl von aus Borsten bestehende, jeweils zwei Borstenbündelhälften bildend mittels eines Ankers im Kopfteil befestigte Borstenbündel auf. Der Anker mindestens eines Borstenbündels ist wenigstens annähernd rechtwinklig zu einer Zahnbürstenlängsachse orientiert und mindestens zwei Borstenbündel weisen eine Borstenbündelhälfte mit relativ zu den Borstenenden der anderen Borstenbündelhälfte höherstehenden Borstenenden aufweisen. Besonders bevorzugt ist eines dieser mindestens zwei Borstenbündel jenes, welches mit dem wenigstens annähernd rechtwinklig zu der Zahnbürstenlängsachse orientierten Anker befestigt ist. Weitere bevorzugte Ausführungsformen dieser Zahnbürste sind in den folgenden Abschnitten angegeben.

Die Borsten sind bevorzugt einseitig zugespitzte Borsten.

Die zugespitzten Enden der zugespitzten Borsten bilden bevorzugt die höherstehenden Borstenenden.

Bevorzugt ist der Anker mehrerer Borstenbündel wenigstens annähernd rechtwinklig zu der Zahnbürstenlängsachse orientiert und sind die betreffenden Borstenbündelhälften mit den höherstehenden Borstenenden dem Halsteil zugewandt sowie die betreffenden Borstenbündelhälften mit den tiefer stehenden Borstenenden dem Halsteil abgewandt. Besonders bevorzugt trifft dies für alle Borstenbündel zu.

Auch bevorzugt ist der Anker mehrerer Borstenbündel wenigstens annähernd rechtwinklig zu der Zahnbürstenlängsachse orientiert ist und sind die betreffenden Borstenbündelhälften mit den höherstehenden Borstenenden, von in Richtung der Zahnbürstenlängsachse benachbarten Borstenbündel, einander zugewandt. Besonders bevorzugt trifft dies für alle Borstenbündel zu.

Weiter bevorzugt ist der Anker mehrerer Borstenbündel wenigstens annähernd rechtwinklig zu der Zahnbürstenlängsachse orientiert und sind die betreffenden Borstenbündel in quer zur Zahnbürstenlängsachse verlaufenden, in Richtung der Zahnbürstenlängsachse hintereinander angeordneten Reihen angeordnet. Die Borstenbündel sind dabei reihenweise gleich orientiert und die betreffenden Borstenbündelhälften mit den höherstehenden Borstenenden der Borstenbündel einer Reihe sind bezüglich der betreffenden Borstenbündelhälften mit den höherstehenden Borstenenden einer benachbarten Reihe einander zugewandt beziehungsweise von einander abgewandt. Besonders bevorzugt sind die Anker aller Borstenbündel wenigstens annähernd rechtwinklig zu der Zahnbürstenlängsachse orientiert und gilt Obiges für alle Borstenbündel. Weiter verlaufen die Reihen bevorzugt rechtwinklig zur Zahnbürstenlängsachse.

Bei einer weiteren bevorzugten Ausführungsform ist der Anker mehrerer Borstenbündel wenigstens annähernd rechtwinklig zu der Zahnbürstenlängsachse orientiert und sind die betreffenden Borstenbündelhälften mit den höherstehenden Borstenenden dem Halsteil abgewandt sowie die betreffenden Borstenbündelhälften mit den tiefer stehenden Borstenenden dem Halsteil zugewandt. Bevorzugt trifft dies für alle Anker und alle Borstenbündel zu.

Bei einem Verfahren zur Herstellung einer obenstehend besonders bevorzugten Zahnbürste mit einem Handgriff und einem borstentragenden Kopfteil, die durch einen Halsteil miteinander verbunden sind, werden im Kopfteil aus einer Vielzahl von Borsten bestehende Borstenbündel, jeweils zwei Borstenbündelhälften bildend mittels eines Ankers in Sacklöchern des Kopfteils befestigt. Der Anker mindestens eines Borstenbündels wird wenigstens annähernd rechtwinklig zur Zahnbürstenlängsachse orientiert in den Kopfteil gestanzt. Die Borsten mindestens von zwei Borstenbündel werden asymmetrisch um den Anker gefaltet, wodurch eine Borstenbündelhälfte mit relativ zu den Borstenenden der anderen Borstenbündelhälfte höherstehende Borstenenden aufweist.

Bei diesem Verfahren werden bevorzugt als Borsten einseitig zugespitzt Borsten verwendet werden.

Bevorzugt werden die Borsten an ihren beiden Borstenenden vor dem Einbringen in die Sacklöcher des Kopfteils zugespitzt und / oder gerundet.

Diese Borsten werden bevorzugt nach dem Einführen in die Sacklöcher nicht mehr bearbeitet.

Die höherstehenden Borstenenden sind relativ zu den Borstenenden der übrigen Borsten 0.5 mm bis 5 mm höherstehend angeordnet. Bevorzugt stehen sie 2 mm bis 3 mm höher als die Borstenenden der übrigen Borsten.

Die Borstenbündel des Kopfteils können Borsten mit unterschiedlichen Borstenenden umfassen. Neben zylindrischen Borsten mit abgerundeten Enden können auch Borsten mit zugespitztem Ende vorhanden sein. Vorzugsweise ist der Querschnitt kreisförmig, kann aber auch eine vom Kreis abweichende Form aufweisen.

In einer anderen Ausführungsform weist der Kopfteil neben konventionellen, extrudierten Borsten mit abgerundeten oder zugespitzten Borstenenden mindestens eine weichelastische Struktur auf. Diese weichelastische Struktur ist vorzugsweise als Reinigungs- und Massageelement ausgestaltet. Im Unterschied zu den Borsten werden die weichelastischen Strukturen vorzugsweise zusammen mit dem Zahnbürstengriff mittels Spritzgusstechnik, zum Beispiel im Zwei- oder Mehrkomponenten-Spritzgussverfahren, hergestellt.

Eine Vorrichtung zum Beborsten einer Zahnbürste umfasst eine Stopfvorrichtung mit einer Borstenzuführung und einem Borsten-Bündelförderer mit einer Kerbe. Dem Borsten-Bündelförderer ist ein Anschlag der Borstenbündel zugeordnet. Dabei sind der Anschlag und/oder die Borstenzuführung senkrecht zu einer Bewegungsebene des Bündelförderers verstellbar.

Der Anschlag ist dabei vorzugsweise zwischen 2 mm und 30 mm, besonders bevorzugt zwischen 4 mm und 10 mm, in seiner Höhe verstellbar.

Um eine möglichst gute Bewegung der Borsten zu gewährleisten, weist der Anschlag in einem Bereich, in welchem er mit Borsten in Kontakt kommt, eine polierte Oberfläche, das heisst eine polierte Unterstützungsfläche auf.

In einer bevorzugten Ausführungsform der Vorrichtung zum Beborsten von Zahnbürsten ist der Abstand zwischen der Unterstützungsfläche des Anschlags und dem Bündelförderer konstant gehalten (parallele Ebenen). Das heisst, die Unterstützungsfläche des Anschlags und der Bündelförderer sind in parallelen Ebenen angeordnet.

In einer anderen Ausführungsform ist der Abstand zwischen der Unterstützungsfläche des Anschlags und dem Bündelförderer variabel. Dabei nimmt der Abstand A in einer vom Stoffkanal wegführenden Richtung ab, das heisst, die Ebenen stehen in einem Winkel zueinander.

In einem Verfahren zur Herstellung einer Zahnbürste werden die Zahnbürsten mit einer oben beschriebenen Vorrichtung beborstet.

Die vorliegende Erfindung wird im Folgenden mit Bezug auf die Zeichnung näher erläutert. Dabei zeigen rein schematisch:
- Fig. 1: die Ansicht eines Zahnbürstenkopfs in Richtung der Längsachse der Zahnbürste;
- Fig. 2: Borstenbündel in Richtung der Längsachse eines Ankers;
- Fig. 3: Borstenbündel in Querrichtung zur Längsachse des Ankers;
- Fig. 4: eine mögliche Anordnung der Anker in einem Kopfteil einer Zahnbürste mit weggelassenen Borsten;
- Fig. 5: eine vergrösserte Darstellung des Endbereiches des in Fig. 4 gezeigten Kopfteils mit dargestellten Borsten;
- Fig. 6: eine Aufsicht auf ein vergrössertes Borstenbündel aus Fig. 5;
- Fig. 7: eine Aufsicht auf einen Borsten-Bündelförderer und eine Borstenzuführung mit zwei Stoffkanälen;
- Fig. 8: eine mögliche Position eines verstellbaren Anschlags zu einem Borstenbündelförderer und einen Stoffkanal;
- Fig. 9: eine weitere mögliche Position eines verstellbaren Anschlags zu einem Borsten-Bündelförderer und einen Stoffkanal aus Fig. 8;
- Fig. 10: eine mögliche Position eines verstellbaren Anschlags zu einem Borsten-Bündelförderer und einem verstellbaren Stoffkanal;
- Fig. 11: eine weitere mögliche Position eines verstellbaren Anschlags zu einem Borsten-Bündelförderer und einem verstellbaren Stoffkanal aus Fig. 10;
- Fig. 12: einen Ausschnitt aus einer Verdrängerschiene der Vorrichtung;
- Fig. 13: einen Ablauf wie er mit der in Fig. 12 gezeigten Verdrängerschiene durchgeführt wird;
- Fig. 14: die Form des Endbereichs je einer zylindrischen abgerundeten (Fig. 14a) und einer zylindrischen zugespitzten Borste (Fig. 14b);
- Fig. 15: in Aufsicht eine weitere mögliche Anordnung der Anker in einem Borstenfeld auf einer Zahnbürste;
- Fig. 16: in Seitenansicht eine Variante der Beborstung mit den in Fig. 15 gezeigten Ankerstellungen;
- Fig. 17: in Seitenansicht eine weitere Variante der Beborstung mit den in Fig. 15 gezeigten Ankerstellungen;
- Fig. 18: in Seitenansicht eine weitere Variante der Beborstung mit den in Fig. 15 gezeigten Ankerstellungen;
- Fig. 19: eine weitere möglich Anordnung der Anker in einem Borstenfeld einer elektrisch betriebenen Zahnbürste mit rotierender oder oszillierender Bewegung in Draufsicht;
- Fig. 20: in Seitenansicht eine weitere Variante der Beborstung mit den in Fig. 19 gezeigten Ankerstellungen;
- Fig. 21: in Seitenansicht eine weitere Variante der Beborstung mit den in Fig. 19 gezeigten Ankerstellungen;
- Fig. 22: eine weitere möglich Anordnung der Anker in einem Borstenfeld einer elektrisch betriebenen Zahnbürste mit rotierender oder oszillierender Bewegung in Draufsicht; und
- Fig. 23: der Prozessablauf für das Herstellen von einseitig zugespitzten und gefärbten Borsten mit einem gerundeten zylindrischen Borstenende.

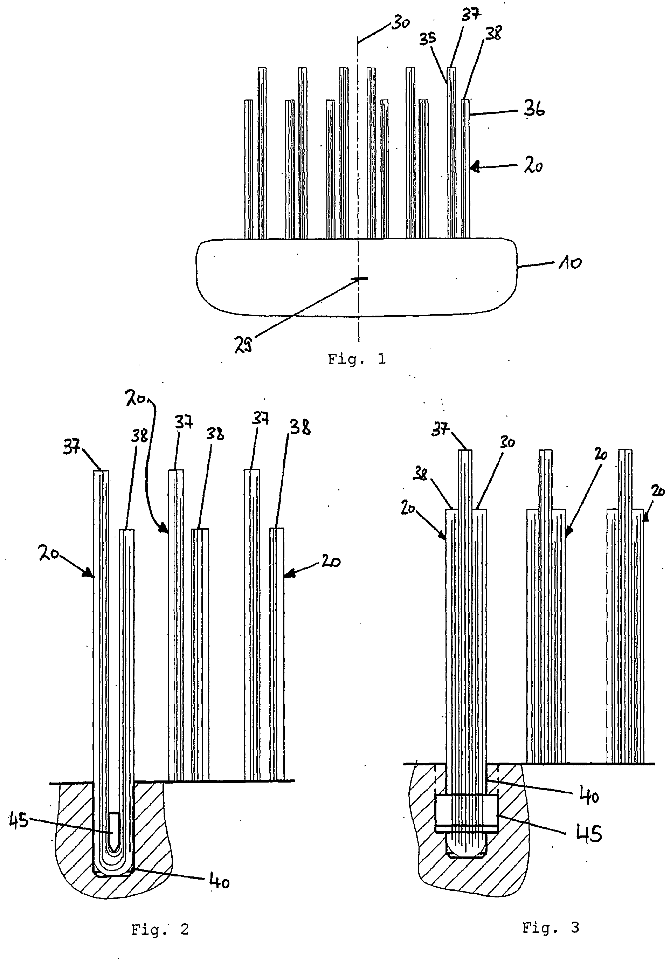

Fig. 1 zeigt eine Ansicht eines Kopfteils 10 einer Zahnbürste - eines Zahnbürstenkopfs - in Richtung der senkrecht zur Betrachtungsebene stehenden Längsachse 29 der Zahnbürste. Die gezeigten Borstenbündel 20 sind in einer Querreihe auf dem Kopfteil 10 angeordnet und erstrecken sich wenigstens annähernd, hier genau senkrecht vom Kopfteil 10 weg. Die Borstenbündel 20 umfassen Borsten 21 mit einem relativ zu den anderen Borsten höherstehenden Borstenende 37. In der gezeigten Ausführungsform ist die Borstenbündelhälfte 35 der Borstenbündel 20, welche die Borsten 21 mit höherstehenden Borstenenden 37 umfasst, auf den gegenüberliegenden Seiten der Mittellängsebene 30 jeweils zu dieser Mittellängsebene hin orientiert. Dementsprechend ist die Mehrheit der Borsten mit tieferstehenden Borstenenden 38 von der Mittellängsebene weg gewandt. Die gezeigten sechs Borstenbündel 20 haben demzufolge auf den gegenüberliegenden Seiten der Mittellängsebene 30 unterschiedliche Orientierungen, diese Charakteristik ist aufgrund der höherstehenden Borstenenden 37 gut erkennbar.

Die Borsten 21 sind auf der ganzen Zahnbürste auf diese Weise angeordnet, ausser Borstenbündel 20, welche auf der Längsachse 29 angeordnet sind. Letztere können auf die eine oder andere Seite der Längsachse bzw. der Mittellängsebene hin orientiert sein. Im Profil der Borstenenden ergibt sich durch die Höherstellung und Tieferstellung gewisser Borstenenden gegenüber anderen Borsten zwei Ebenen von Enden, wobei die höherstehenden Borstenenden 37 besser in die Zahnzwischenräume eindringen als die tieferstehenden Borstenenden 38.

In der Darstellung der Fig. 1, wie auch der nachfolgenden Fig. 2, ist in den Borstenbündeln 20 der Abstand aufgrund des sie in bekannter Art und Weise im Bürstenkopf 10 haltenden Ankers 45 jeweils relativ markant dargestellt. Die Zeichnungen sind schematisch, in der Realität "sträusseln" die Borsten etwas und dieser Abstand ist am Ende des Borstenbündels 20 oder auch schon auf der Ebene der tieferstehenden Borstenenden 38 nicht mehr sichtbar.

Ein konventionelles und bekanntes Verfahren zum Beborsten von Zahnbürsten ist das Befestigen der Borstenbündel 20 mittels Ankern 45 im Kopfteil 10. In der Fig. 2 wird eine detaillierte Ansicht eines Borstenbündels 20 in Richtung der Längsachse eines Ankers 45 gezeigt. Der Anker 45 faltet das Borstenbündel 20 in zwei Teile. Beim Stopfen der Borstenbündel 20 in dafür vorgesehene Sacklöcher 40 des Kopfteils klemmt der Anker 45 die Borsten 21 im Sackloch fest. Dabei dringt der Anker 45 in den Kunststoff, der das jeweilige Sackloch 40 umgibt, ein und verankert sich auf diese Weise an der jeweiligen Position. Die Borsten 21 werden in der Folge zwischen der Wand des Sacklochs 40 und gewissen Oberflächen des Ankers 45 festgeklemmt.

Die Faltung der Borsten 21 durch den Anker 45 passiert bei konventionellen Zahnbürsten symmetrisch, das heisst, dass auf beiden Seiten des Ankers 45 gleich viel an Borstenlänge vorhanden ist. Vorliegend werden jedoch die Borstenbündel 20 asymmetrisch gefaltet. Die drei gezeigten Borstenbündel 20 mit den höher- beziehungsweise tieferstehenden Borstenenden 37, 38 sind im vorliegenden Beispiel alle gleich orientiert, d.h. die höherstehenden Borstenenden 37 sind immer auf derselben Seite des Ankers 45 realisiert. Es ist generell so, dass die höherstehenden Borstenenden 37 immer auf derselben Seite der Ankers 45 angeordnet sind. Es ist nicht so, dass ein Teil der höherstehenden Borstenenden auf der linken Seite des Ankers angeordnet sind und ein anderer Teil auf der rechten Seite des Ankers.

Fig. 3 zeigt Borstenbündel 20 in Querrichtung zur Längsachse des Ankers 45. Dabei ist der Schnitt durch das Sackloch 40 nur bei einem Borstenbündel 20 gezeigt. Aus dieser Ansicht in Kombination mit Fig. 2 wird deutlich, dass nur ein kleinerer Teil der Borsten 21 eines Borstenbündels 20 über Borstenenden 37 verfügt, die relativ zu den Borstenenden 38 der anderen Borsten 20 höher stehen. In Fig. 3 ist auch gut erkennbar, wie stark der Anker 45 in den das Sackloch 40 umgebenden Kunststoff eindringt. Die Kante dieser Spur des Eindringens ist in der Figur gestrichelt dargestellt.

Die Längenverhältnisse in den Borstenbündeln 20 der fertigen Zahnbürste sind so, dass jeweils das Borstenbündel 20 ab dem Austritt aus dem Sackloch 40 bis zu den höherstehenden Borstenenden 37 eine Länge vom 9 mm bis 15 mm, vorzugsweise von 10 mm bis 12 mm, hat. Die Länge ab Austritt aus dem Sackloch 40 bis zu den tieferstehenden Borstenenden 38 beträgt zwischen 6 mm und 11 mm, vorzugsweise 8 mm bis 10 mm. Die höherstehenden Borstenenden 37 sind relativ zu den Borstenenden 38 der übrigen Borsten 0.5 mm bis 5 mm höherstehend angeordnet. Bevorzugt stehen sie 2 mm bis 3 mm höher als die Borstenenden 38 der übrigen Borsten.

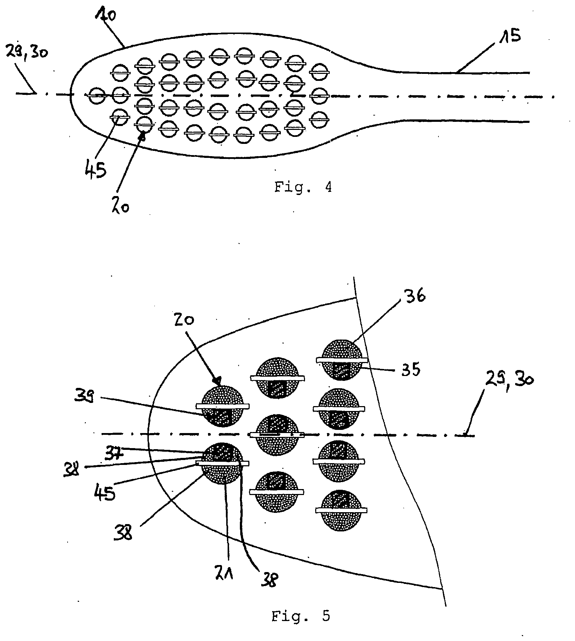

In Fig. 4 wird eine mögliche Anordnung der Anker 45, vermittels welcher die Borstenbündel 20 in dem Kopfteil 10 der Zahnbürste befestigt sind, gezeigt. Der an den Kopfteil 10 angrenzende Halsteil 15 ist nur teilweise abgebildet, an den Halsteil 15 schliesst in bekannter Art und Weise ein Handgriff an.

Dabei haben in der gezeigten Ausführungsform alle Anker 45 die gleiche Orientierung beziehungsweise Ausrichtung gegenüber der Längsmittelachse 29. Im vorliegenden Beispiel ist der Winkel, welcher vom Anker 45 und der Längsmittelachse 29 eingeschlossen wird 0°. Der Winkel kann vorzugsweise in einem Bereich zwischen 0° und 30° liegen.

Die Borstenbündel 20 sind für die Ausführung der Erfindung in Querreihen auf dem Kopfteil 10 angeordnet. In Fig. 4 sind die Borsten 21 aus darstellungstechnischen Gründen nicht gezeigt.

Fig. 5 zeigt eine vergrösserte Darstellung des freien Endbereiches des in Fig. 4 gezeigten Kopfteils 10, diesmal mit gezeigten Borsten 21. Wiederum sind die in Querreihen angeordneten Borstenbündel 20 zu erkennen.

Der Anker 45 des Borstenbündels 20 teilt dieses Borstenbündel in der Aufsicht in zwei Hälften. Die Borstenbündelhälfte 35 des Borstenbündels 20, welche die Borsten 21 mit höherstehenden Borstenenden 37 beinhaltet, ist dabei zur Mittellängsebene 30 hin orientiert. Die höherstehenden Borsten 37 sind in der Figur schraffiert dargestellt. Die von der Mittellängsebene 30 abgewandte Borstenbündelhälfte 36 des Borstenbündels 20 umfasst nur Borsten 21 mit tieferstehenden Borstenenden 38.

Ebenfalls zu erkennen ist in dieser Ansicht, dass die Borstenbündelhälfte 35 der Borstenbündel 20 mit Borsten, die ein relativ zu den anderen Borsten höherstehendes Borstenende 37 aufweisen, auch Borsten mit tieferstehendem Borstenende 38 umfassen.

Die zur Mittellängsebene 30 parallel ausgerichteten Anker 45 ergeben bei den in Querreihen auf dem Kopfteil 10 angeordneten Borstenbündeln 20 eine spiegelbildliche Anordnung der Borstenbündel 20. Davon ausgenommen sind Borstenbündel, durch welche die Mittellängsebene 30 hindurchgeht. In solchen Borstenbündeln 20 weisen die Borsten 21 mit höherstehenden Borstenenden 37 entweder auf die eine oder auf die andere Seite der Mittellängsebene 30.

Die Anordnung der höherstehenden und tieferstehenden Borstenenden 37, 38 ist auch umgekehrt orientiert möglich, sodass die höherstehenden Borstenenden 37 von der Mittellängsebene 30 weg gerichtet sind und die tieferstehenden Borstenenden 38 auf die Mittellängsebene 30 zu gerichtet sind. Dabei ist ein wichtiger Punkt, dass der Anker 45, welcher die Borstenbündel im Kopfteil 10 fixiert, auch einen Winkel zur Längsachse 29 einnehmen kann. In diesem Fall spricht man von zur Mittellängsebene 30 orientierten höherstehenden Borstenenden 37, wenn sie im Winkel d.h. der Fläche zwischen 0° und 89.99° zwischen der Ankerlängsachse und der Mittellängsebene 30 angeordnet sind. Umgekehrt wird von der Mittellängsebene 30 weg orientierten höherstehenden Borstenenden 37 gesprochen, wenn die tieferstehenden Borstenenden 38 wie eben beschrieben angeordnet sind.

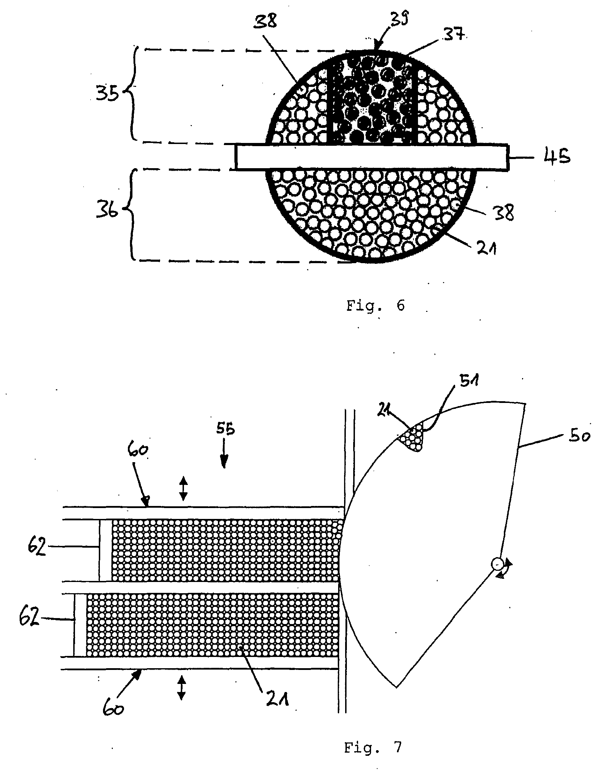

Fig. 6 zeigt eine Aufsicht auf ein einzelnes, vergrössert gezeigtes Borstenbündel 20 aus Fig. 5. Der Anker 45 teilt das Borstenbündel 20 in zwei Borstenbündelhälften 35 und 36. Dabei umfasst die Borstenbündelhälfte 36 nur Borsten 21 mit tieferstehenden Borstenenden 38, das heisst, dass alle Borsten 21 in der Borstenbündelhälfte 36 (mindestens annähernd) gleich weit hoch stehen. Im Gegensatz dazu sind in der Borstenbündelhälfte 35 sowohl Borsten 21 mit höherstehenden Borstenenden 37 als auch Borsten 21 mit tieferstehenden Borstenenden 38 vorhanden. Die Borsten 21 mit höherstehenden Borstenenden 37 sind im Beispiel in einer zusammenhängenden Region 39 der Borstenbündelhälfte 35 angeordnet.

In Fig. 7 wird eine Aufsicht auf einen Borsten-Bündelförderer 50 und eine Borstenzuführung 55 mit zwei Stoffkanälen 60 einer Stopfmaschine für Zahnbürsten (einer Beborstungsmaschine) gezeigt. Die Borsten 21 werden in den beiden Stoffkanälen 60 durch Drücker 62 zum Borsten-Bündelförderer 50 hin gedrückt. Der Borsten-Bündelförderer 50 ist um eine Achse drehbar gelagert, um welche er eine Vorwärts-Rückwärts-Drehbewegung ausführt. Das Mass der Drehung wird durch verschiedene Punkte definiert, die die Kerbe 51 anlaufen muss. Zum einen ist dies der Umkehrpunkt am Ende der Stoffkanäle 60, zum andern der Punkt an welchem das Bündel mit dem Anker 45 in das Sackloch 40 gestanzt wird. Fährt die Kerbe 51 während der Drehung den Stoffkanal 60 entlang und ist sie in diesem Moment nicht gefüllt, füllt sie sich mit Borsten 21. Durch das Entfernen von Borsten 21 am Ende des Stoffkanals 60, das heisst, am entgegengesetzten Ende des Drückers 62, werden die Borsten 21 im Stoffkanal 60 in Richtung des Borsten-Bündelförderers 50 transportiert.

Die Borsten 21 aus den verschiedenen Stoffkanälen 60 können verschiedene Eigenschaften, beispielsweise verschiedene Farben, haben. Um die Borsten 21 aus dem einen oder anderen Stoffkanal 60 zu nehmen, muss sich der entsprechende Stoffkanal 60 während der Phase des Verfahrens, in welcher das rückwärtige Ende des Borsten-Bündelförderers 50 den Stoffkanal 60 verschliesst, seitlich bewegen, damit der richtige Stoffkanal 60 zum Füllen der Kerbe 51 bereit steht.

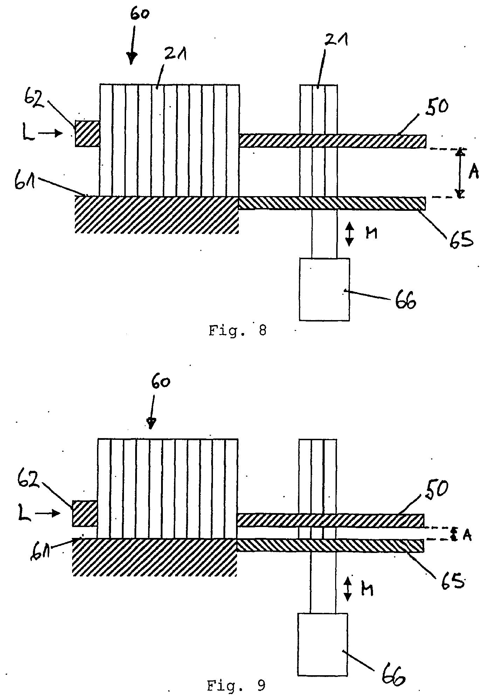

Fig. 8 zeigt eine mögliche Position eines verstellbaren Anschlags 65 zu einem Borstenbündelförderer 50 und einen Stoffkanal 60. Dies könnte beispielsweise im oberen Stoffkanal 60 aus Fig. 7 der Fall sein.

In Fig. 8 fördert der Drücker 62 die Borsten 21 in Förderrichtung L zum Borsten-Bündelförderer 50. Der Anschlag 65 ist gegenüber dem Borsten-Bündelförderer 50 in seiner Höhe, d.h. in einer senkrecht zur Bewegungsebene des Borsten-Bündelförderers 50 bzw. zu dessen Drehachse oder parallel zu den Borsten 21 im Stoffkanal 60 stehenden Richtung M, durch ein Antriebsmittel 66 verstellbar angeordnet. Wenn Borsten 21 vom Stoffkanal 60 zum Borsten-Bündelförderer 50 transportiert werden, ist der verstellbare Anschlag 65 im vorliegenden Fall auf der Höhe des Stoffkanalbodens 61 positioniert. Dadurch sind die Borsten 21 vom Stoffkanal 60 her bis sie aus der Kerbe 51 entfernt werden durchgehend an mindestens einem ihrer Enden geführt bzw. unterstützt, damit sie nicht aus der Kerbe 51 fallen oder sich in der Kerbe 51 verklemmen. Der Abstand A zwischen dem Borsten-Bündelförderer 50 und dem Anschlag 65 ist konstant. In der gezeigten Position des Anschlags 65 befindet sich der Borsten-Bündelförderer 50 in einer ersten Position relativ gegenüber der Borsten 21 bzw. deren Länge.

In Fig. 9 wird der untere Stoffkanal 60 aus dem Beispiel aus Fig. 7 dargestellt. Die beiden in den Fig. 8 und 9 gezeigten Stoffkanäle 60 beziehungsweise die entsprechenden Stoffkanalböden 61 sind gegenüber dem Borsten-Bündelförderer 50 auf verschiedenen Ebenen angeordnet. Jede der Anordnungen steht für eine Orientierung der höherstehenden Borstenenden 37 in der fertigen Zahnbürste. Dabei ist der Borsten-Bündelförderer 50 aber immer an derselben Position angeordnet, er ist von der Position her fixiert.

Die Fig. 9 zeigt eine weitere mögliche Position eines verstellbaren Anschlags 65 zu einem Borsten-Bündelförderer 50 und einem Stoffkanal 60. Die Borsten 21 befinden sich relativ gegenüber dem Borsten-Bündelförderer 50 in einer anderen Position als die in Fig. 8 gezeigten. In der gezeigten Position des Anschlags 65 wurde der Abstand zwischen dem Anschlag 65 und dem Borsten-Bündelförderer 50 verringert, so dass sich der Borsten-Bündelförderer 50 bzw. die Kerbe 51 nun relativ gegenüber den Borsten 21 nicht mehr an derselben Stelle wie in Fig. 8 gezeigt befindet. Die Borsten 21 werden wiederum in der Förderrichtung L zum Borsten-Bündelförderer 50 hin transportiert.

Die durch die Vorrichtungen aus Fig. 8 und 9 in den Zahnbürstenkopf 10 eingebrachten Borsten 21 besitzen bezüglich der Mittellängsebene 30 eine ganz bestimmte Orientierung. Alle durch die in Fig. 8 gezeigte Vorrichtung eingebrachten Borsten 21 haben eine bestimmte Orientierung gegenüber der Mittellängsachse 30 der Zahnbürste. Die durch die in Fig. 9 gezeigte Vorrichtung eingebrachten Borsten 21 haben die gegenteilige Orientierung. So werden beispielsweise die Borsten 21 der in Fig. 1 gezeigten Zahnbürste aus zwei solchen Vorrichtungen gespendet. Die Borsten 21 auf der linken Seite der Mittellängsebene 30 können beispielsweise durch die in Fig. 8 gezeigte Vorrichtung gespendet werden, jene auf der rechten Seite durch die Vorrichtung in Fig. 9. Demzufolge sind alle Borstenbündel 20, die von der einen Vorrichtung gespendet werden, in derselben Richtung orientiert. Die in diesem Absatz jeweils als einzelne Vorrichtung beschriebenen Anordnungen von Stoffkanal 60, Anschlag 65 und Borsten-Bündelförderer 60 in Fig. 8 und 9 bilden zusammen eine einzige Vorrichtung, wie sie beispielsweise in Fig. 7 dargestellt ist. Eine Figur (Fig. 8 oder 9) zeigt den oberen Stoffkanal 60, die andere den unteren Stoffkanal 60. Welcher Stoffkanal 60 welche Konfiguration hat, spielt für das Ausführen des erfindungsgemässen Verfahrens keine Rolle.

Zentral für die vorliegende Erfindung ist das sogenannte asymmetrische Stanzen. Das heisst, dass der Anker 45 gegenüber der Länge der Borsten 21 nicht mittig eingebracht wird, wie dies im Normalfall bei Borstenbündeln mit durchwegs gleich hohen Borstenenden der Fall ist.

In Bezug auf den Borsten-Bündelförderer 50, wie er beispielsweise in Fig. 8 und 9 gezeigt ist, wird der Anker 45 direkt oberhalb von diesem eingebracht. Da der Borsten-Bündelförderer 50 in den beiden Figuren bezüglich der Borstenlänge zwei verschiedene Positionen einnimmt, ergeben sich zwei unterschiedliche Asymmetrien. Einmal stehen die Enden auf der einen Seite des Ankers höher, einmal die anderen. In Fig. 8 beispielsweise wird der Anker 45 näher am oberen Ende der Borsten 21 eingebracht, das heisst, dass die Borstenenden, die den Stoffkanalboden 61 berühren, höher stehen. In der Fig. 9 ist es genau umgekehrt, die Borstenenden, die den Stoffkanalboden 61 berühren, bilden die tiefer stehenden Borstenenden, wenn sie in den Zahnbürstenkopf 10 eingebracht worden sind.

Der verstellbare Anschlag 65 ist in Richtung M zwischen 2 mm und 30 mm vorzugsweise zwischen 4 mm und 10 mm verstellbar. Die Oberfläche des Anschlags 65 ist zudem eine wichtige Komponente im Verfahren. Um die optimale Förderung der Borsten 21 zu gewährleisten, ist die Oberfläche des Anschlags 65 vorzugsweise poliert oder hochglanzpoliert. Allenfalls ist es auch möglich, eine Beschichtung auf die Oberfläche aufzutragen, welche die Oberfläche verbessert. Ziel der Oberflächenbehandlung oder -bearbeitung ist es, den Reibungswiderstand zwischen den Borsten 21 und dem Anschlag 65 zu minimieren und auf diese Weise eine gute, prozesssichere Förderung zu erreichen.

Der verstellbare Anschlag 65 aus Fig. 8 und 9 erst ermöglicht das Herstellen einer Zahnbürste mit asymmetrisch gestanzten Borstenbündeln 20 in mehreren Orientierungen oder erfindungsgemäss mit verschiedenen Abständen der höherstehenden und tieferstehenden Borstenenden 37, 38, wie beispielsweise im Zusammenhang mit Fig. 1 erklärt, auf einer Beborstungsmaschine mit einer Stanzeinheit (Beborstungseinheit) . Das heisst, dass aufgrund des verstellbaren Anschlags vorteilhafterweise nur eine Anker-Einbring-Einrichtung nötig ist.

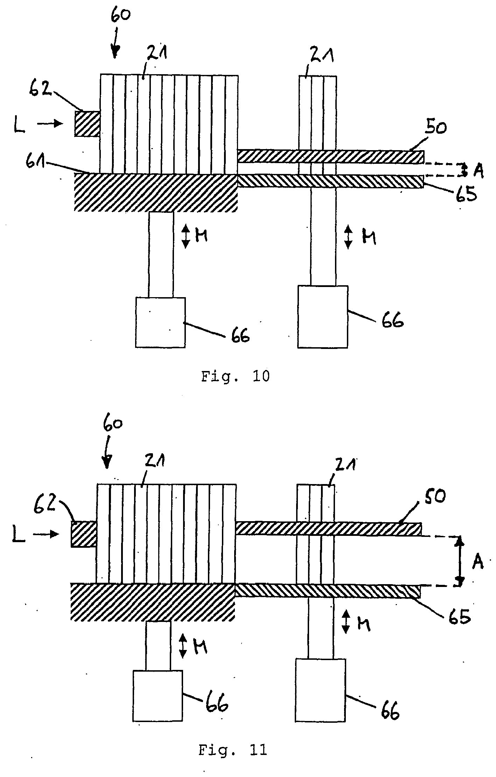

In den Fig. 10 und 11 wird eine weitere Ausführungsform der Vorrichtung gezeigt. Dadurch, dass sowohl die Stoffkanäle 60 wie auch der Anschlag 65 in der Höhenposition verstellt werden können, ergeben sich weitere Möglichkeiten der Borstenfeldgestaltung. Die Konstante in dieser Anordnung ist, wie schon in der in Fig. 8 und 9 gezeigten Ausführungsform, der Borsten-Bündelförderer 50, welcher von der Position her fix angeordnet ist. Die Draufsicht auf die in dieser Weise aufgebaute Vorrichtung ist die gleiche wie in Fig. 7.

Fig. 10 zeigt eine mögliche Position eines verstellbaren Anschlags 65 zu einem Borsten-Bündelförderer 50 und einem verstellbaren Stoffkanal 60. Im Unterschied zu den in den Fig. 8 und 9 gezeigten Vorrichtungen sind in diesem Fall sowohl der Anschlag 65, durch ein Antriebsmittel 66, als auch der Stoffkanal 60, welchem ebenfalls ein Antriebsmittel 66 zugeordnet ist, in ihrer Höhe verstellbar. Die Richtung M, in welcher die Höhe des Anschlags 65 und/oder des Stoffkanals 60 verstellbar ist, steht rechtwinklig zur Bewegungsebene des Borsten-Bündelförderers 50. Drücker 62 befördern die Borsten 21 in der Förderrichtung L.

In Fig. 11 wird eine weitere mögliche Position eines verstellbaren Anschlags 65 zu einem Borsten-Bündelförderer 50 und einem verstellbaren Stoffkanal 60 aus Fig. 10 gezeigt. Dabei sind wiederum sowohl der Stoffkanal 60 als auch Anschlag 65 unabhängig voneinander durch Antriebsmittel 66 in ihrer Höhe senkrecht zur Bewegungsebene des Borsten-Bündelförderers 50 verstellbar angeordnet. Der Anschlag 65, wie auch die Stoffkanäle 60, sind hierbei in der Höhe in Richtung M zwischen 2 mm und 30 mm, vorzugsweise zwischen 4 mm und 10 mm, verstellbar.

Die in der Förderrichtung L durch Drücker 62 transportierten Borsten 21 werden einerseits durch den Stoffkanalboden 61 und andererseits durch den Anschlag 65 gestützt und so gegen ein Verrutschen in senkrechter Richtung gegenüber der Förderrichtung L gesichert. Speziell an dieser Anordnung ist, dass der Drücker 62 in der Höhe nicht angepasst wird. Er wird immer in derselben Ebene relativ zum Stoffkanalboden 61 gehalten, unabhängig von der Position des Borsten-Bündelförderers 50. Deshalb ist es je nach Ausgestaltung der Verhältnisse von Borsten-Bündelförderer 50 zur Borstenlänge, d.h. je nach Position des Förderers nötig, zusätzliche Stützmittel am Ende des Stoffkanals 60 oder oberhalb der Borstenenden anzubringen, die das Funktionieren des Prozesses aber nicht einschränken. Ansonsten ist es je nachdem möglich, dass die Borsten 21 aufgrund des Drucks vom Drücker 62 her senkrecht aus dem Stoffkanal 60 gedrückt werden.

Im Weiteren muss unter Umständen in den gezeigten Situationen gemäss den Fig. 10 und 11 allenfalls ein weiteres Element hinzugefügt werden, welches über dem Stoffkanal 60 liegt und verhindert, dass die Borsten 21 bei der Bewegung des Stoffkanals 60 durch Antriebsmittel 66 senkrecht aus dem Kanal rutschen. Ob eine solche Anpassung erfolgen muss, hängt von den Eigenschaften der Borsten 21 (Oberflächenreibung etc.) ab.

Die Verstellbarkeit der Stoffkanäle 60 und des Anschlags 65 kann verschieden gestaltet sein. Beispielsweise können die beiden Stoffkanäle 60 durch ein einziges Antriebsmittel 66 in der Höhe verstellt werden. Weiter ist es aber auch möglich, die Stoffkanäle 60 mit individuellen Antriebsmitteln 66 auszugestalten und sie so unabhängig voneinander einstellbar zu machen, was jedoch eine konstruktive Anpassung der Anordnung der Stoffkanäle notwendig machen würde. Unter dem Gesichtspunkt der Kosten bringt diese zweite Variante jedoch keine wesentlichen Vorteile, da die Variabilität der Funktion nicht zunimmt. Der Anschlag muss allerdings immer individuell, das heisst unabhängig von den Stoffkanälen 60, einstellbar sein, da dies wesentlich ist.

Durch die Möglichkeiten der Individualisierung, die sich durch die verschiedenen Einstellmöglichkeiten an der Vorrichtung ergeben, können Bürsten mit sehr speziellen Borstenbildern geschaffen werden. Beispielsweise können auf diese Weise auf einer erfindungsgemässen Zahnbürste Borstenbündel mit verschiedenen Längen zwischen den höherstehenden und den tieferstehenden Borstenenden 37, 38 erreicht werden. Die Antriebsmittel 66 können verschieden ausgestaltet sein. Möglichkeiten für das Antriebsmittels 66 sind beispielsweise Motoren (Schrittmotoren, etc.), pneumatische oder hydraulische Zylinder, oder ähnliches. Der Anschlag 65 wird üblicherweise nur verstellt, wenn der Borsten-Bündelförderer 50 leer ist, das heisst, wenn kein Borstenbündel 20 in der Kerbe 51 fortbewegt wird.

Es ist wichtig, dass die verschiedenen eingesetzten Mittel, die mit Borsten 21 in Kontakt kommen, vom Stoffkanal 60 bis zum Einbringen der Borsten 21 in die Sacklöcher, sehr genau ausgestaltet sind und deren Oberfläche optimiert wurde, beispielsweise durch Hochglanzpolieren. Betreffend den Anschlag wurde dies bereits früher im Text beschrieben. Damit wird zusätzlich erreicht, dass die Borstenbündel 20, beziehungsweise die Borsten 21 in den Borstenbündeln 20, sehr genau ausgerichtet in die Sacklöcher 40 eingebracht werden. Dies ist wichtig, da die tieferstehenden Borstenenden 38 nicht geschnitten werden. Daher müssen diese Borstenenden bereits beim Einbringen ins Sackloch die nötige Ausrichtung relativ zueinander haben. Weniger Reibungswiderstand bedeutet in diesem Fall weniger Verschiebungen der einzelnen Borsten 21.

Eine weitere Ausgestaltungsmöglichkeit des Verfahrens besteht darin, beispielsweise den in Fig. 8 bis 11 gezeigten Anschlag 65 speziell zu formen. Dabei könnte der Anschlag 65, der in den beschriebenen Fällen eben ausgestaltet ist (geradlinige Fortführung des Stoffkanalbodens 61 parallel zum Borsten-Bündelförderer 50), als gewinkelte Ebene (d.h., sie hat zwei in einem Winkel zueinander angeordnete Teilebenen) gestaltet sein. Die Ebene wäre in diesem Fall so gestaltet, dass sie nach dem stetigen Übergang vom Stoffkanalboden 61 entlang der Bewegungsrichtung des Borstenbündels in der Kerbe 51 eine Steigung oder ein Gefälle aufweist. Der beschriebene Abstand A wäre somit nicht mehr konstant. Damit könnte erreicht werden, dass die asymmetrische Stanzung beispielsweise extremer ausgeführt werden könnte. Es wäre jedoch nötig, spezielle Massnahmen zu treffen, damit dies für beide Orientierungs-Richtungen der Borstenbündel 20 im Zahnbürstenkopf 10 möglich würde. Da die Borstenenden, die während der Förderung am Anschlag 65 anliegen, in einem Fall in der fertigen Zahnbürste die höherstehenden Borstenenden 37 und im anderen Fall die tieferstehenden Borstenenden 38 sind. Mögliche Massnahmen hierbei wären beispielsweise, dass sich der Anschlag 65 zusätzlich zur Höhenbewegung entlang der Bewegungsrichtung M noch in einer anderen Richtung bewegt und auf diese Weise ein anderes Profil in die Bewegungskurve des Borstenbündels in der Kerbe 51 auf dem Anschlag ergibt.

Im Weiteren ist es auch möglich, dass der angetriebene Anschlag 65 während des Förderns eines Borsten-Bündels verstellt würde. Dabei wäre die Verstellung der Höhe gegenüber dem Borsten-Bündelförderer 50 in beide Richtungen möglich und die verschiedenen Orientierungen der höherstehenden und tieferstehenden Borstenbündel 37, 38 könnten damit bedient werden.

Um Zahnbürsten mit verschieden grossen Borstenbündeln 20 zu schaffen, könnte im Prozess ein Borsten-Bündelförderer 50 eingesetzt werden, in welchem eine variable Kerbe 51 eingebracht ist. Eine variable Kerbe 51 könnte während des Prozesses, wenn sie nicht gefüllt ist, in ihrer Grösse angepasst werden, so dass letztlich mehr oder weniger Borsten 21 aus dem Stoffkanal 60 in die Sacklöcher 40 transportiert werden.

Die Ausgestaltung der Zahnbürste beziehungsweise die Orientierung der höherstehenden und tieferstehenden Borstenenden 37, 38 sind bedeutsam für die Prozesseffizienz oder auch für die Zykluszeit des Beborstens der Zahnbürste. Vorzugsweise ist die Orientierung der Borstenbündel so festgelegt, dass im Beborstungsprozess immer mehrere Bündel gleicher Orientierung in den Kopfteil 10 eingebracht werden können. Dadurch müssen der Anschlag 65 und auch die Stoffkanäle 60 nicht nach jedem Borstenbündel umgestellt werden. Der Prozess wird schneller und auch weniger fehleranfällig.

Im Beborstungsprozess der Zahnbürsten werden die Borsten 21, nachdem sie im Kopfteil 10 befestigt sind, nachbearbeitet. Das heisst sie werden unter anderem profiliert. Ein Oberflächenprofil wird zum Beispiel erreicht durch Wegschneiden oder Wegfräsen der zu langen Teile der Borsten. Im Weiteren werden sie anschliessend gerundet.

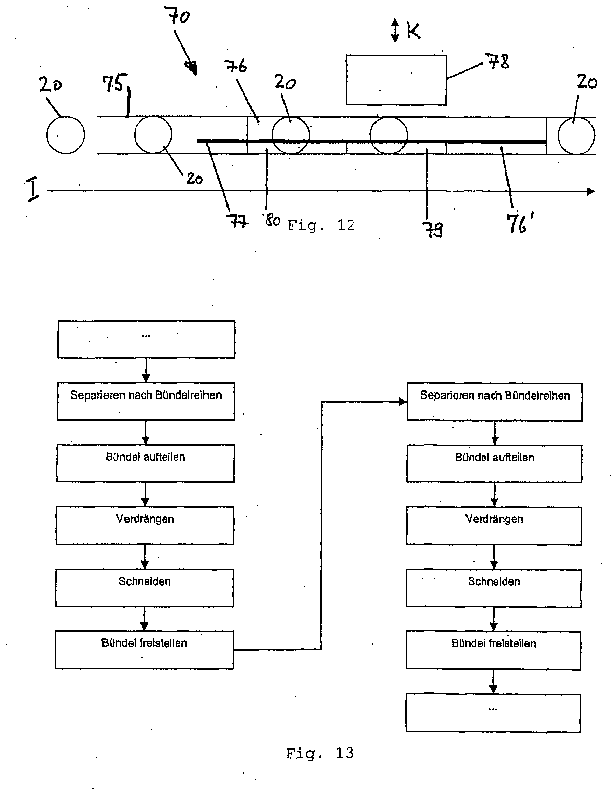

Die weiteren folgenden Schritte der Profilierung wurden ebenfalls weiter entwickelt und ergänzen die Erfindung. Im Zusammenhang mit Fig. 12 wird dies im Detail erläutert. Für die Profilierung der Zahnbürsten werden in den Bearbeitungsschritten sogenannte Verdrängerschienen 70 eingesetzt, die die Borsten 21 der Zahnbürste teilweise verdrängen, so dass die zu bearbeitenden Borsten 21 besser zugänglich sind. Borstenbündel 20 werden in einem ersten Schritt an ihren höherstehenden Borstenenden 37 profiliert. Eine Profilierung der Borstenbündelhälfte 36, welche nur aus tieferstehenden Borstenenden 38 besteht, wird vorzugsweise nicht vorgenommen. Ansonsten wäre eine entsprechende Verdrängung der höherstehenden Borstenenden 37 notwendig.

Fig. 12 zeigt einen Ausschnitt aus einer Verdrängerschiene 70 der Vorrichtung zum Beborsten von Zahnbürsten. Ein einzelnes Borstenbündel 20 wird in Bewegungsrichtung I in einen Borstenbündelkanal 75 eingeführt. Der Borstenbündelkanal 75 läuft parallel zur Bewegungsrichtung I und die Borstenbündel 20 werden in Bewegungsrichtung fortbewegt. Dabei greift eine parallel zur Längsrichtung der Borstenbündel 20 angeordnete Kante 77 in das Borstenbündel 20 ein und teilt dieses in zwei Teile. Die beiden Teile sind nicht gleich gross. Der grössere Teil des Borstenbündels 20 wird nun durch einen Verdrängerkanal 76 hindurchgeführt. Dabei werden die freien Borstenenden verdrängt, das heisst, abgelenkt und stehen während des Durchführens durch den Kanal nicht mehr hoch. Der Verdrängerkanal 76 ist in diesem Bereich vom Querschnitt her ähnlich einem U-Profil oder V-Profil geformt, das heisst, er ist auf drei Seiten geschlossen und kann die Borsten 21 auf diese Weise aufnehmen.

Der weniger grosse Teil des Borstenbündels 20 wird nach dem Aufteilen des Borstenbündels 20 durch die Kante 77 in einem ersten Teil ebenfalls verdrängt und in einen Ordnungskanal 80 geführt, anschliessend während dem Durchlauf aber gleich wieder freigestellt. Die Freistellung passiert in einem Freistellungsbereich 79 während des Durchführens des Borstenbündels 20 durch den Borstenbündelkanal 75. Die Borsten 21 des Borstenbündels 20 werden in diesem Freistellungsbereich 79 nicht verdrängt, so dass die freien Borstenenden im Wesentlichen senkrecht hochstehen und von einem Schneidmesser 78 oder einem anderen Bearbeitungsmittel, beispielsweise einem Fräser, das sich rechtwinklig zur Bewegungsrichtung I des Borstenbündels 20 entlang der Bewegungsrichtung K des Schneidmessers vor und zurück bewegt, auf die gewünschte Länge verkürzt werden. Anschliessend werden die nicht verdrängten Borsten 21 wiederum in einen Verdrängerkanal 76' geführt, bevor sie wieder freigestellt werden. Diese Verdrängung der bearbeiteten Borsten 21 hat keine bearbeitungstechnischen Gründe. Die Verdrängung wird jedoch vorzugsweise eingebaut, um die Kante 77 zu stabilisieren. Damit wird erreicht, dass die Kante 77 während dem Bearbeiten weniger vibriert oder aufgrund der Beanspruchung (temporär) verbogen wird und somit die Bearbeitung erschwert, beziehungsweise die Bündelaufteilung nicht mehr konstant passiert, da der Eingriff der Kante 77 in das Borstenbündel 20 variiert.

Eine komplette Verdrängerschiene 70 ist eine Aneinanderreihung von mehreren Ausschnitten gemäss Fig. 12, wobei vorzugsweise zwei solche Ausschnitte aneinander gereiht werden. Der Unterschied zwischen den beiden nacheinander folgenden Ausschnitte kann darin liegen, dass die Kante 77 relativ zum Borstenbündel 20 anders positioniert wird, somit anders verdrängt werden kann. Zudem kann der Verdrängerkanal 76 in Längsrichtung auf der anderen Seite des Borstenbündelkanals 75 angeordnet werden.

Für die Herstellung von Borstenbündeln 21 gemäss Fig. 1-3 wird der Verdrängerkanal im ersten Teil analog der in Fig. 12 gezeigten Variante benötigt und im zweiten Teil quasi gespiegelt. Das heisst, die Kante 77 wird so angebracht, dass das kleinere Teil auf der oberen Seite (siehe Fig. 12) zu liegen kommt. Zusätzlich ist der Verdrängerkanal 76 auf in Längsrichtung des Borstenbündelkanals 75 auf der anderen Seite angebracht. Die Verhältnisse der Aufteilung der Borstenbündel 20 durch die Kante 77 ist in beiden Schritten dieselbe, nur eben anders orientiert bzw. gespiegelt.

In Fig. 13 wird ein Ablauf, wie er mit der in Fig. 12 gezeigten Verdrängerschiene durchgeführt wird, in seinen einzelnen aufeinanderfolgenden Schritten gezeigt. In einem ersten Schritt werden die in Reihen angeordneten Borstenbündel 20 separiert durch Einführen in den Borstenbündelkanal 75. Anschliessend wird jedes einzelne Borstenbündel 20 in zwei Teile aufgeteilt, wobei der grössere Teil des aufgeteilten Borstenbündels 20 verdrängt wird und daher dem Schneidmesser 78 nicht zugänglich ist.

Für die Schaffung von Borstenbündeln 20 gemäss Fig. 1 - 3 umfasst der grössere, verdrängte Teil des Borstenbündels 20 ungefähr zwei Drittel der Borsten 21 des Borstenbündels; generell umfasst der verdrängte Teil des Borstenbündels 20 zwischen 55% und 85% vorzugsweise zwischen 55% und 70% den Borsten 21. Der kleinere, nicht verdrängte Teil des Borstenbündels 20 umfasst im Fall von Fig. 1 - 2 ungefähr einen Drittel der Borsten 21 des Borstenbündels 20. Der nicht verdrängte und daher hochstehende Teil des Borstenbündels 20 wird in einem nächsten Schritt auf die gewünschte Länge geschnitten. Nach dem Schneidvorgang wird das Borstenbündel 20 wieder freigestellt. Das heisst, der verdrängte Teil wird aus dem Verdrängerkanal 76 hinausgeführt. Nachdem das Borstenbündel 20 freigestellt wurde, wiederholt sich der gesamte Vorgang, so dass jedes Borstenbündel 20 zweimal geschnitten wird. Dabei werden in den beiden Vorgängen jeweils unterschiedliche Teile des Borstenbündels 20 verdrängt, wobei gewisse Bereiche in beiden Vorgängen verdrängt und demzufolge nicht geschnitten werden.

Hinsichtlich des Verdrängens ist es so, dass sich die Aufteilung der Borsten 21 durch die Kante 77 in sehr kleinen Dimensionen bewegt. Zudem ist die Form, wie die Borsten 21 aus dem Sackloch 40 hervorstehen, in gewissem Ausmass zufällig. Deshalb ist es nicht möglich, genau zu definieren, wie viele Borsten 21 beispielsweise verdrängt werden oder auch wie viele Borsten 21 im späteren bearbeiteten Fall höherstehende Borstenenden 37 aufweisen. Die Zahlen bewegen sich immer in gewissen Bereichen.

Für die konkrete Realisierung von Zahnbürsten mit Querreihen gemäss Fig. 1 heisst dies, dass die Zahnbürste so orientiert ist, dass die Längsachse 29 der Zahnbürste senkrecht zur Bewegungsrichtung I angeordnet wird.

Mehrere Borstenbündelkanäle 75 sind direkt nebeneinander angeordnet, so dass eine Zahnbürste, bestehend aus einer Vielzahl von Reihen, beziehungsweise deren Borstenbündel 20 mindestens teilweise parallel bearbeitet werden.

Werden Zahnbürsten mit Reihen geschaffen, welche in einem von 90° abweichenden Winkel zur Längsachse 29 der Zahnbürste angeordnet sind, muss die Bürste für die Bearbeitung anders orientiert in die Verdrängerschiene 70 eingebracht werden. Damit die Verarbeitung möglich ist, wird die Längsachse 29 der Zahnbürste vom Winkel her so angeordnet, dass die Richtung der Reihen parallel ist zur Bewegungsrichtung I, d.h. der Richtung der Borstenbündelkanäle 75.

Wichtig bei derartigen Zahnbürsten ist, dass alle Borstenbündel 20, die zu Borstenbündeln 20 mit höherstehenden und tieferstehenden Borstenenden bearbeitet werden sollen, in Querreihen angeordnet sind, die sich nicht überschneiden. Die Symmetrien werden in diesem Fall gegenüber winklig zur Längsachse 29 angebrachten Achse erzielt.

Um die Darstellung des Ausschnitts der Verdrängerschiene 70 in Fig. 12 und den Vergleich mit dem Borstenbündel 20 gemäss Fig. 6 und die entsprechenden Bearbeitungsschritte noch weiter zu illustrieren, ist folgendes anzumerken: Das in Fig. 6 gezeigte Borstenbündel wird senkrecht zum Anker 45 in den Borstenbündelkanal 75 eingeführt. Die Bewegungsrichtung I ist demzufolge für dieses Borstenbündel 20 ebenfalls senkrecht zum Anker 45. Im nun dargelegten Beispiel ist die Bewegungsrichtung so festgelegt, dass die Borstenbündelhälfte 35 mit den höherstehenden Borstenenden 37 voran läuft. Das heisst, dass zuerst das ganze Borstenbündel 20 in den Borstenbündelkanal 75 eingefahren wird. Anschliessend teilt die Kante 77 das Borstenbündel 20 entlang des späteren Übergangs von den höherstehenden Borstenenden 37 zu den tieferstehenden Borstenenden 38. Die später höherstehenden Borstenenden 37 werden zusammen mit den später tieferstehenden Borstenenden 38 auf der linken Seite des Bündels 20 verdrängt. Danach werden die tieferstehenden Borstenenden 38 auf der rechten Seite des Borstenbündels 20 auf ihre Länge geschnitten. Konkret heisst dies, dass der entsprechende Ausschnitt zwischen dem Anker 45 und den höherstehenden Borstenenden 37 weggeschnitten wird. Nachher wird das Borstenbündel 20 wieder freigestellt und im zweiten Schritt passiert die Bearbeitung auf der linken Seite des Borstenbündels 20.

Im Rahmen des Profilierens der Borstenbündel 20 ist es neben dem Ausdünnen auch möglich, die höherliegenden und tieferliegenden Borstenenden 37, 38 zu profilieren. Entweder geschieht dies vor der soeben beschriebenen Ausdünnung oder danach; vorzugsweise findet diese Profilierung nach dem Aus- oder Verdünnen statt. Die höherliegenden Borstenenden 37 können beispielsweise so geschnitten werden, dass sie ein gewünschtes Profil bilden. Beispielsweise eine Fläche, zum Beispiel in flacher (ebener) oder gewellter Form. Andere Formen sind ebenfalls denkbar. Für die fertige Zahnbürste kann dies am Schluss ausgestaltungsmässig dazu führen, dass beispielsweise innerhalb des selben Borstenfeldes verschiedene Längen zwischen den höherstehenden und den tieferstehenden Borstenenden 37, 38 erreicht werden.

Weiter können beispielsweise die höherstehenden Borstenenden 37 verdrängt werden und die tieferstehenden Borstenenden 38 in der Borstenbündelhälfte 36 auf diese Weise geschnitten werden. Vorzugsweise wird dieser Schritt aber nicht durchgeführt und durch ein sehr präzises und gut ausgerichtetes Einbringen der Borsten 21 in die Sacklöcher 40 erreicht.

Im Prozessablauf erfolgt nach dem Profilieren und Ausdünnen der Borstenbündel 20 der Prozess des Rundens der Borsten 21. Bei der Verwendung von zylindrischen Borsten 21 werden alle Borstenenden 37, 38 gerundet. Bei Verwendung von einseitig zugespitzten Borsten, wobei die höherstehenden Borstenenden 37 zugespitzt sind, werden die zylindrischen Enden, das heisst die tieferstehenden Borstenenden 38, gerundet. Werden beidseitig zugespitzte Borsten verwendet, findet entweder keine Profilierung und keine Rundung statt, oder es findet eine Profilierung statt und nur die tieferstehenden Borstenenden 38 werden gerundet. Dementsprechend werden die Zuspitzungen der tieferliegenden Borstenenden 38 auch in einem gewissen Mass gerundet.

In einem ersten Schritt bzw. in einer ersten Abfolge von Schritten werden dabei die tieferstehenden Borstenenden 38 gerundet. Das bedeutet, dass die Schleifvorrichtung, welche für das Verrunden verwendet wird, auf die Höhe dieser Borstenenden 38 eingestellt wird und vorzugsweise die höherstehenden Borstenenden 37 dabei nicht verdrängt werden. Eine oder mehrere im Prozess nacheinander angeordnete Schleifscheiben nehmen dann die Verrundung vor. Anschliessend erfolgt in einem zweiten Schritt beziehungsweise einer zweiten Abfolge von Schritten die Verrundung der höherstehenden Borstenenden 37. Die Schleifvorrichtung wird dazu auf die Höhe dieser Borstenenden 37 eingestellt. Wiederum nehmen eine oder mehrere nacheinander angeordnete Schleifscheiben die Verrundung vor. Anschliessend ist der funktionelle Teil der Zahnbürste fertig gestellt.

Speziell am Verrundungsprozess ist, dass einerseits für jede Verrundungshöhe eine oder mehrere Schleifscheiben eingesetzt werden. Dabei werden für den zweiten Verrundungsschritt gleich viele oder mehr Schleifscheiben eingesetzt als für den ersten Schritt. Dies kann nötig sein, weil durch die erste Verrundung gewisse Schädigungen an den höherstehenden Borstenenden 37 entstehen können. Deshalb müssen diese Borstenenden 37 eher länger gerundet werden, als die im ersten Schritt gerundeten tieferstehenden Borstenenden 38.

Weitere Ausgestaltungsmöglichkeiten des Verrundungsprozesses sind möglich, um allfällige Schädigungen der höherstehenden Borstenenden 37 während dem ersten Verrundungsschritt zu minimieren. Dabei könnten beispielsweise die höherstehenden Borstenenden 37 während dem ersten Verrundungsschritt verdrängt werden.

Für die Realisierung von erfindungsgemässen und erfindungsgemäss hergestellten Zahnbürsten können die verschiedensten Borstenarten verwendet werden. Bevorzugt werden zylindrische Borsten 22 oder zugespitzte Borsten 23 eingesetzt.

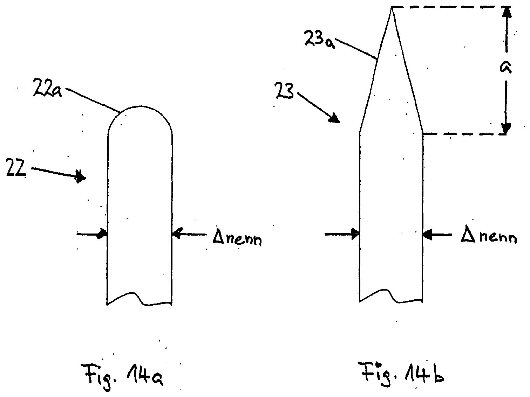

Fig. 14a zeigt das Borstenende einer zylindrischen Borste 22. Die zylindrischen Borsten 22 sind vorzugsweise aus Polyamid (PA) hergestellt. Sie weisen über die Borstenlänge einen im Wesentlichen konstanten Nenndurchmesser A_{ner.n} auf. Der Nenn-Durchmesser ist der Durchmesser an der dicksten Stelle der Borste. Der NennDurchmesser beträgt beispielsweise 0,15 bis 0,25 mm. Die Spitze 22a der Borste 22 ist im Endzustand in der Zahnbürste abgerundet.

Zugespitzte Borsten 23 sind in Fig. 14b dargestellt. Zugespitzte Borsten 23 sind vorzugsweise aus Polyester (PBT) hergestellt und haben über einen Bereich ihrer Länge ebenfalls einen konstanten Durchmesser, z.B. ebenfalls einen Nenn-Durchmesser von 0,15 - 0,25 mm. Zur Spitze 23a hin verjüngt sich die Borste 23, beginnend bei einem Abstand a gemessen von der Spitze 23a. Gemessen ab der Spitze 23a entspricht der Durchmesser an der entsprechenden Stelle beispielsweise folgenden Werten:

| Abstand (mm) | % des Nenndurchmessers | |
|---|---|---|
| | Mittelwert | Toleranzbereich |
| 0,1 | 8% | 5-15% |
| 1 | 25% | 15-35% |
| 2 | 45% | 30-60% |
| 3 | 60% | 50-80% |
| 4 | 75% | 60-90% |
| 5 | 80% | 70-90% |
| 6 | 85% | > 75% |
| 7 | 90% | >80% |

Der Zuspitzungsprozess basiert auf der Reduktion des Durchmessers mittels eines chemischen Prozesses. Je nach Länge des Aufenthaltes der Borste in der chemischen Substanz baut sich der Kunststoff ab und verringert sich der Durchmesser. Die Form der Spitze ist so beeinflussbar.

Grundsätzlich existieren zwei Arten von zugespitzten Borsten 23. Jene die nur an einem Ende eine Zuspitzung aufweisen und jene die an beiden Borstenenden eine Zuspitzung haben. Die Zuspitzung ist von den Dimensionen her in beiden Fällen wie oben angegeben gestaltet. Die einseitig zugespitzten Borsten 23 haben an einem Ende eine Zuspitzung und am anderen Ende sind sie zylindrisch gestaltet und können abgerundet werden. Die beidseitig zugespitzten Borsten 23 sind an beiden Enden mit einer Zuspitzung ausgestaltet.

Um genügend Stabilität der einzelnen Filamente zu bewahren, wird der Nenndurchmesser über einen Grossteil der Länge auf über 75% belassen. Die oben aufgeführte Tabelle zeigt, dass die Zuspitzung der Filamente zum überwiegenden Teil auf den letzten 4 bis 5 mm erfolgt. Mit dieser Ausgestaltung kann die Spitze 23a kleinste Fissuren und die Interdentalräume bei genügender Filamentstabilität optimal erreichen.

Für alle Borstenarten wird, um eine genügende Flexibilität der Filamente zu erreichen, eine Länge, ab Austritt aus Sackloch 40 des Kopfteils 10, zwischen 7 und 13 mm gewählt.

Bei erfindungsgemässen Zahnbürsten können die Borsten 21 komplett oder teilweise eingefärbt sein. Dementsprechend können bei teilweise eingefärbten Borsten 21 beispielsweise nur die Borstenenden oder nur ein Borstenende oder auch alles mit Ausnahme der Borstenenden eingefärbt sein. Die Einfärbung selbst kann als Indikator-Einfärbung oder auch als permanente Einfärbung gestaltet sein. Bei der Indikator-Färbung nutzt sich die Farbe im Laufe des Gebrauchs ab und dient so als Gebrauchsindikator.

Die zylindrischen Borsten 22, welche aus Polyamid hergestellt sind, können beispielsweise mit Lebensmittelfarben eingefärbt sein und über der Farbe mit einem Lack versehen sein. Mögliche, einsetzbare Lebensmittelfarben sind beispielsweise für blau "Aluminium Lake of 3,3'-dioxo-2,2'-diindolinyidene-5,5'-disulfonic acid", für gelb "Aluminium Lake of 5-hydroxy-1-(4-sulfophenyl)-4-(4-sulfophenylazo)-3-pyrazolecarboxylic acid" oder "Aluminium Lake of 6-hydroxy-5-(4-sulfophenylazo)-2-naphthalene-sulfonic acid". Diese Farben sind so ausgelegt, dass sie Food-Contact tauglich sind. Sind die Farben auf Borsten 21 aufgebracht, so ist die Oberfläche meistens nicht mehr in der Qualität, die eine automatische Verarbeitung auf Zahnbürsten-Beborstungsmaschinen zulässt. Deshalb werden die gesamten Borsten oder wenigstens die eingefärbten Partien der Borsten mit einem Lack versehen. Dieser Lack macht die Oberfläche glatter und ermöglicht so wiederum die automatische Verarbeitung.

Zugespitzte Borsten 23, welche aus Polyester hergestellt sind, lassen sich auf diese Weise nicht einfärben. Die Einfärbung dieser Borsten 23 muss durch einen chemischen Prozess erfolgen, auf welchen an dieser Stelle aber nicht eingegangen wird. Der Prozess ist an sich bekannt.

Der Vorteil einer Einfärbung kann sein, dass der technische Aspekt der verschieden langen Borsten sichtbar gemacht werden kann, beispielsweise wenn nur die höherstehenden Borstenenden 37 eingefärbt sind, oder wenn lediglich die tieferstehenden Borstenenden 38 eingefärbt sind. Im Weiteren kann durch die Gestaltung als Indikator-Partie für den Kunden der Nutzen der Gebrauchsindikation beziehungsweise Verbrauchsindikation geschaffen werden.

Bevorzugt wird der Teil der Borsten 21 eingefärbt, welcher die höherstehenden Borstenenden 37 umfasst. Die Einfärbung der beidseitigen Enden ist ebenfalls möglich.

Die Einfärbung hat, wenn sie nur die Borstenspitzen betrifft, auf der fertigen Zahnbürste eine Länge von 2 mm bis 10 mm, vorzugsweise zwischen 3 mm und 8 mm. Aufgrund der Verarbeitung ist die Einfärbung auf den nicht verarbeiteten Borsten länger bzw. angepasst, da allenfalls gewisse Teile der Einfärbung weggeschliffen oder weggeschnitten werden. Dementsprechend muss die Einfärbung im Rohmaterial nicht an beiden Enden der Borsten gleich lang sein, so wie sie auch im Endprodukt variieren kann. Bevorzugt ist die Einfärbung im Endprodukt dennoch an beiden Borstenenden gleich lang, falls beide Borstenenden eingefärbt sind.

Weiter ist es möglich, anstelle von Borsten, die aus einem einzelnen Material extrudiert wurden, Borsten einzusetzen, die co-extrudiert sind, d.h. Borsten, die aus zwei oder mehreren Materialien extrudiert wurden. Diese Borsten haben einen Aussen-Durchmesser von 0.1 mm bis 0.4 mm, vorzugsweise von 0.1 mm bis 0.25 mm. Der Aufbau ist jedoch so, dass sie aus einem Kern und einem Mantel bestehen. Der Kern hat einen Durchmesser von 0.8 mm bis 0.16 mm, vorzugsweise 0.1 mm bis 0.14 mm. Der Mantel um den Kern hat eine Dicke von 0.02 mm bis 0.08 mm, vorzugsweise 0.03 mm bis 0.05 mm. Der Kern wie auch der Mantel bestehen vorzugsweise aus Polyester. Es können aber auch zwei verschiedene Materialien eingesetzt werden. Vorzugsweise besitzen der Kern und der Mantel nicht dieselbe Farbe. Durch chemisches oder mechanisches Zuspitzen der Borsten ist es deshalb möglich, denselben Effekt zu schaffen wie er bei Borsten mit eingefärbten Spitzen erreicht werden kann. Durch das Zuspitzen wird der Mantel mindestens teilweise entfernt und von aussen wird auf diese Weise der Kern sichtbar. Beim Verrunden eben dieser Borsten gibt es einen ähnlichen Effekt, nur dass dabei das Ende der Borsten gerundet wird und nicht zugespitzt. Dabei wird durch das Runden ein Teil des Mantels entfernt und der Blick auf den Kern frei. Die Freistellung des Kerns beim Verrunden ist viel geringer als beim Zuspitzen.

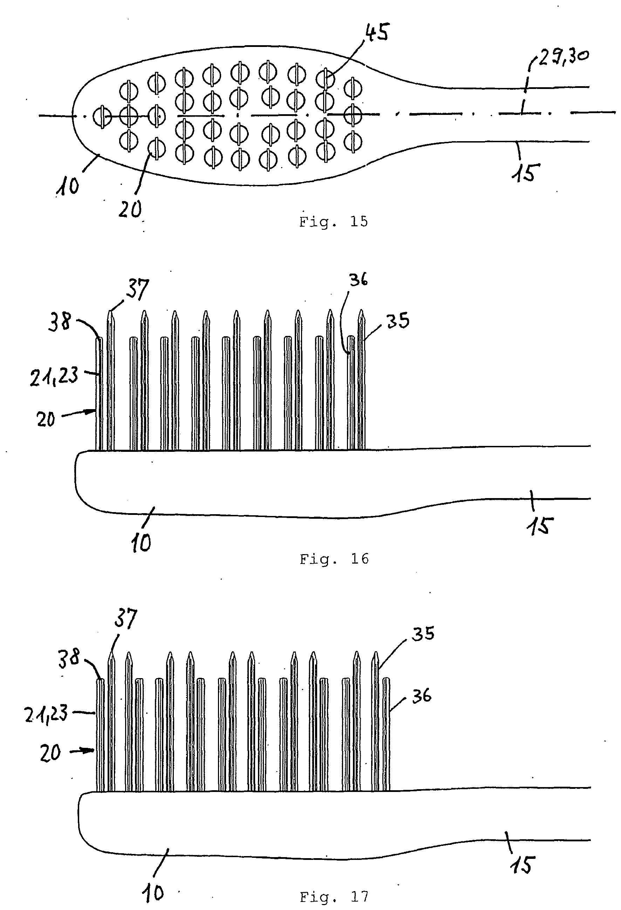

In den Fig. 15 bis 18 wird eine weitere Ausgestaltungsvariante gezeigt. Die Anker 45 werden in einem Winkel von 90° oder 90° +/- 20°, vorzugsweise 90° +/- 10°, bezüglich der Längsachse 29 in das Kopfteil 10 eingebracht.

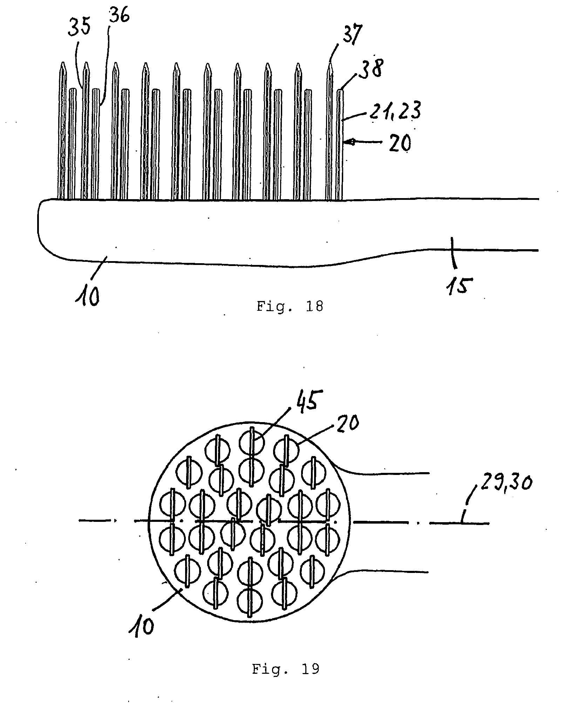

In den Fig. 19 bis 21 ist dasselbe auf einem runden Kopfteil 10 für eine elektrische Zahnbürste mit rotierender oder oszillierender Bewegung gezeigt. Dabei liegt die Längsachse 29 der Zahnbürste im Wesentlichen rechtwinklig zu den dargestellten Ankern 45.

Die in den Figuren gezeigten Borstenbündel 20 weisen wiederum höherstehende Borstenenden 37 und tieferstehende Borstenenden 38 auf. Vorzugsweise werden einseitig zugespitzte Borsten 23 verwendet. Die höherstehenden Borstenenden 37 werden dabei von zugespitzten Enden der Borsten 21 gebildet, was in den Figuren 16 bis 18 und 20 und 21 grafisch durch das spitze Bündelende dargestellt ist.

Die Borstenbündel 20 können bezüglich der Orientierung ihrer höherstehenden und tieferstehenden Borstenenden 37, 38 unterschiedlich aufgebaut sein. Dabei ist es möglich, dass die Borstenbündel 20, wie beispielsweise in den Fig. 16, 18 und 20 gezeigt, uniform orientiert sind. Das heisst, dass die Borstenbündelhälfte 35 mit den höherstehenden Borstenenden 37 immer auf derselben Seite des Ankers 45 angeordnet sind, beispielsweise immer gegen den Handgriff des Zahnbürstenkörpers zu liegen kommen oder immer von ihm weg gerichtet sind.

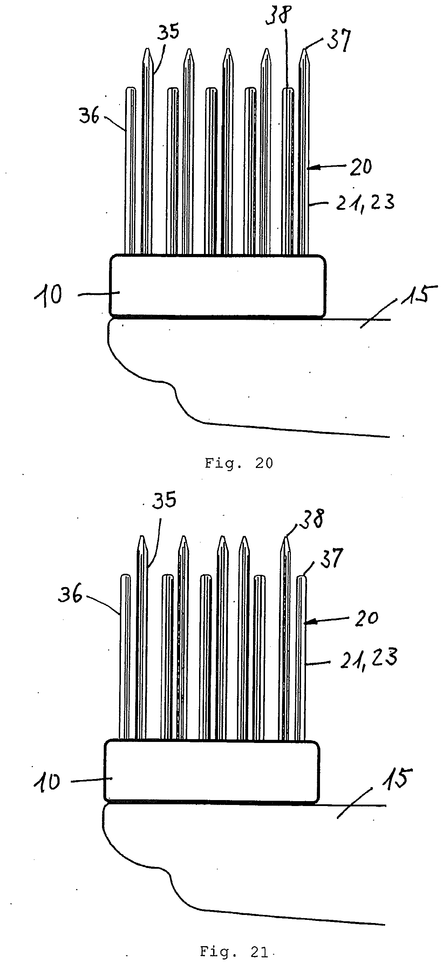

Die Figur 17 zeigt die gegenteilige Anordnung der Borstenbündel 20. Die höherstehenden Borstenenden 37 beziehungsweise die betreffenden Borstenbündelhälften 35 und auch die tieferstehenden Borstenenden 38 beziehungsweise die betreffenden Borstenbündelhälften 36 der unterschiedlichen Borstenbündel 20 sind immer gegeneinander zu gerichtet. Dadurch wird während der Anwendung der Zahnbürste eine bessere Interdentalwirkung erreicht als bei der uniformen Ausrichtung der höherstehenden Borstenenden 37 in den Borstenbündeln 20. Die Kämme dringen besser in die Zahnzwischenräume ein, weil sie von grösseren Flächen mit tieferstehenden Borstenenden 38 umgeben sind. Diese Anordnung ist auch bei Bürstenköpfen, wie in den Figuren 20 und 21 gezeigt, möglich.

In Figur 21 ist die Anordnung gezeigt, in der ein Teil der Borstenbündel 20 auf die eine Seite orientiert ist und ein Teil auf die andere Seite. Diese Ausführungsvariante - Anordnungsvariante kann ebenfalls auf länglichen Kopfteilen 10 realisiert werden.

Die höherstehenden und tieferstehenden Borstenenden 37, 38 sind bezüglich des Ankers 45 identisch angeordnet, wie in Fig. 2 gezeigt. Die in den Fig. 15 bis 21 gezeigten Ausführungsformen sind aber so gestaltet, dass nach dem Einbringen der Anker 45 vorzugsweise keine Nachbearbeitung der Borsten mehr nötig ist. Es erfolgt vorzugsweise keine Reduktion der Anzahl der höherstehenden Borstenenden 37. Vorzugsweise findet auch keine Verrundung der tieferstehenden Borstenenden 38 statt, weil vorzugsweise einseitig zugespitzte Borsten 23 verwendet werden, welche am der Zuspitzung entgegengesetzten Ende der Borste 23 bereits vor dem Einbringen in den Bürstenkörper verrundet sind. Die Längenverhältnisse in Borstenbündeln 20 mit einseitig zugespitzten Borsten 23 entsprechen denselben Verhältnissen, wie sie für die zylindrischen Borsten 22 beschrieben wurden.

Für die Herstellung von Zahnbürsten mit Borstenbündeln gemäss den Bürstenköpfen in Fig. 15 bis 22 wird eine Einrichtung verwendet, wie sie in Fig. 7 bis 11 gezeigt ist, mit dem Unterschied, dass weder der Anschlag 65 noch der Stoffkanal 60 während dem Prozess in der Höhe verstellt werden kann beziehungsweise muss. Im Stoffkanal 60 sind die einseitig zugespitzten Borsten 21 so angeordnet, dass die verrundete Seite auf dem Stoffkanalboden 61 aufliegt und die zugespitzten Enden vom Stoffkanalboden 61 weg zeigen. Durch diese Anordnung wird eine bessere Qualität der Ausrichtung der Borsten 23 im Borstenbündel 20 erreicht, denn die Borstenbündel 20 werden in diesem Fall nicht nachbearbeitet.

Würden die zugespitzten Enden auf dem Stoffkanalboden 61 anliegen, so würden nicht alle Borsten 23 gleich weit aufstehen, da etliche Borsten 23 knicken würden, da der Querschnitt im Bereich 23a der Zuspitzung abnimmt. Dies würde dazu führen, dass die Ausrichtung schlechter wird. Damit bei der Anwendung dennoch verschiedene Ausrichtungen der höherstehenden und tieferstehenden Borstenenden 37, 38 erreicht werden kann, wird im Bearbeitungsprozess der Kopfteil 10 gedreht. Das heisst, dass die Borsten 23 immer in gleicher Orientierung eingebracht werden, nur dass eben der Kopfteil in seiner Orientierung variiert und auf diese Weise die Orientierung der Borstenbündel 20 in der fertigen Zahnbürste nicht uniform sein muss.

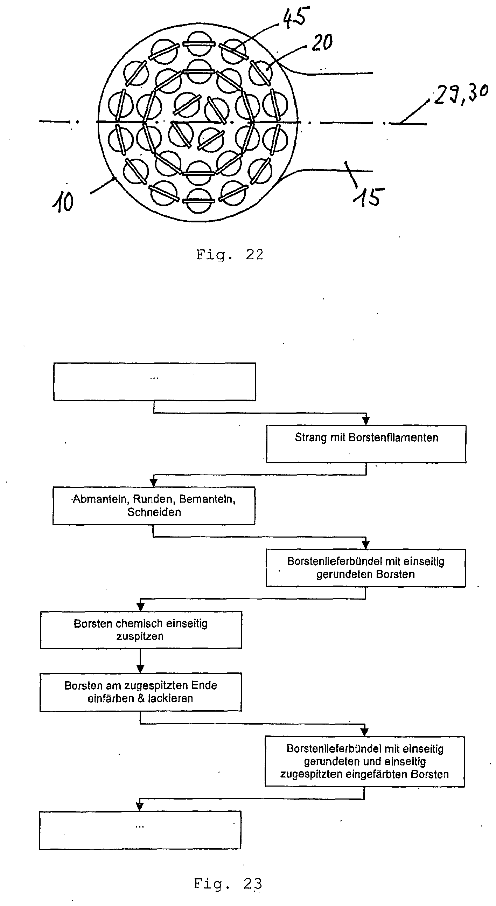

In Fig. 22 ist ein Kopfteil 10 für eine elektrische Zahnbürste mit rotierender oder oszillierender Bewegung gezeigt. Die Anker 45 sind in diesem Fall im Winkel von 90° oder 90° +/- 20°, vorzugsweise 90° +/- 10°, am meisten bevorzugt 90°, zum Radius des Kopfteils 10 angeordnet. Sie liegen tangential an die Kreise, die von den Mittelpunkten der Borstenbündeln 20 gebildet werden.

Die in den Figuren gezeigten Borstenbündel 20 weisen wiederum höherstehende Borstenenden 37 und tieferstehende Borstenenden 38 auf. Vorzugsweise werden einseitig zugespitzte Borsten 23 verwendet. Die höherstehenden Borstenenden 37 werden dabei von zugespitzten Enden der Borsten 23 gebildet.

In dieser Anordnung der Anker 45 können alle Borstenbündel 20 gleich orientiert sein, beispielsweise so, dass die höherstehenden Borstenenden 37 eines jeden Borstenbündels 20 in Richtung gegen den Mittelpunkt des Borstenfeldes gerichtet sind oder auch, dass sie von diesem weg gerichtet sind.

Weiter können die Borstenbündel 20 auch kreisweise eine uniforme Orientierung der höherstehenden und tieferstehenden Borstenenden 37, 38 haben, beispielsweise in der Konfiguration, dass jeweils die höherstehenden und die tieferstehenden Borstenenden 37, 38 von verschiedenen Borstenbündeln 20 gegeneinander zu orientiert sind. Weiter ist es auch möglich, die Borstenbündel 20 auf den Kreisen abwechslungsweise zu orientieren.

Eine weitere Ausführungsvariante der tangentialen Anordnung der Anker 45 liegt darin, dass in einem Borstenfeld mit runder oder länglicher Ausdehnung nicht alle Borstenbündel 20 Anker 45 in der besagten Ausrichtung besitzen. So dass beispielsweise gewisse Anker 45 trotzdem rechtwinklig zur Längsachse 29 orientiert sind, oder eine andere Orientierung besitzen.

Es ist auch möglich, dass ein Borstenfeld gestaltet wird, in dem ein Teil der Borstenlöcher in kreisförmiger Anordnung angelegt ist, der andere Teil aber in Reihen parallel zur Längsrichtung ausgeführt ist. Hierbei ist die Ankerausrichtung auch wieder nicht uniform über das ganze Borstenfeld.

Im Zusammenhang mit Fig. 23 wird ein Ablauf beschrieben, wie die Herstellung von einseitig zugespitzten Borsten 23 mit abgerundetem entgegengesetztem Ende und Einfärbung der Zuspitzung funktioniert.

Die Borstenfilamente werden am Borstenstrang in den Prozess eingebracht. Dabei sind eine Vielzahl von Filamenten mittels eines Mantels gebündelt und haben eine Länge, die ein Vielfaches der finalen Länge der Borsten in der Zahnbürste ist. Die Länge kann beispielsweise im Bereich von 80 cm bis 120 cm liegen. Der Mantel dient dabei einerseits dem Bündeln der Filamente, damit diese aneinander anliegend bleiben, und andererseits hat der Mantel eine Schutzfunktion, dass die Filamente weniger verschmutzt oder beschädigt werden.

Diese Stränge mit Borstenfilamenten werden in einem ersten Schritt für die Bearbeitung vorbereitet. Beispielsweise kann dies beinhalten, dass sie mindestens teilweise abgemantelt werden und dass sie in der Vorrichtung entsprechend der nachfolgenden Bearbeitung geklemmt werden.

Der Bearbeitungsschritt umfasst beispielsweise das Runden des freien Endes des Borstenstrangs. Dabei werden alle Borstenenden des Borstenstrangs miteinander verrundet. Das Schleifelement, beispielsweise ein Diamantschleifer, rundet in einem Schritt alle Borstenenden des Borstenstrangs.

Da der Borstenstrang im vorherigen Schritt vom Mantel mindestens teilweise befreit worden ist, können die Borstenfilamente während des Rundungsprozesses auslenken. Es wird eine individuelle Bewegung der Filamente in einem begrenzten Rahmen erlaubt. Die Rundung wird dadurch besser und regelmässiger.

Danach wird der Borstenstrang wieder ummantelt, d.h. mit einem Mantel versehen, und anschliessend in die Grösse eines Borstenlieferbündels geschnitten. Diese beiden Schritte können auch in umgekehrter Reihenfolge passieren. Das Borstenlieferbündel ist dabei ein Stück des Borstenstrangs, welches eine Länge hat, welche etwas mehr als der doppelten Borstenlänge entspricht.

Nachdem die Borsten nun einseitig verrundet sind, folgt die Bearbeitung des anderen Endes der Borsten. Dieses Ende wird zugespitzt und allenfalls eingefärbt. Die Zuspitzung erfolgt in einem ersten Schritt und passiert auf chemischem Weg, d.h. Chemikalien übernehmen den Materialabtrag. Nachfolgend werden die zugespitzten Enden eingefärbt, mögliche Parameter und Eigenschaften der Einfärbung sind bereits vorgängig erwähnt, und mit einem Lack überzogen. Der Lack dient dazu, die Oberflächenbeschaffenheit (Reibungswerte etc.) der einzelnen Borste so zu gestalten, dass sie maschinell verarbeitbar ist.

Anschliessend werden die einseitig zugespitzten Borsten in Borstenlieferbündeln (die nun ein anderes Aussehen haben als die Borstenlieferbündel zuvor) verpackt. Dabei zeigen die Spitzen aller Borsten in dieselbe Richtung und die Borstenlieferbündel weisen einen Durchmesser von beispielsweise 3 bis 5 cm auf. Die Form der Borstenlieferbündel ist vorzugsweise elliptisch bis rechteckig ausgestaltet, aufgrund ihres Transportmediums, beispielsweise einer länglichen Kartonverpackung.

Die Länge der Borstenlieferbündel beträgt von 40 mm bis 60 mm, vorzugsweise von 45 mm bis 55 mm, bei einer Breite von 25 mm bis 40 mm, vorzugsweise von 30 mm bis 35 mm. In dieser Ausgestaltung / Anlieferungsform entspricht die Breite des Borstenlieferbündels im Wesentlichen der Breite des Stoffkanals 60, vergl. Fig. 7. Diese erlaubt ein einfacheres Einführen der Borstenlieferbündel in den Stoffkanal 60 ohne die fragilen Borstenlieferbündel zu stark deformieren zu müssen. Des Weiteren können die Borstenlieferbündel in dieser Form einfacher und platzsparender in einer länglichen Kartonverpackung transportiert werden. Weiter weisen die Borstenlieferbündel seitlich um das Bündel einen Haltestreifen begrenzter Länge auf, welcher die grosse Anzahl zugespitzter Borsten zusammenhält. Aufgrund der begrenzten Länge des Haltestreifens wird praktisch kein Druck auf die zugespitzten Borsten im Borstenlieferbündel ausgeübt.

Für die Herstellung von erfindungsgemässen Zahnbürsten können verschiedene Kunststoffe eingesetzt werden. Beispielhafte Möglichkeiten aus dem Bereich der Thermoplaste sind:
- Styrolpolymerisate wie Styrolacrylnitril (SAN), Polystyrol (PS), Acrylnitrylbutadienstyrol (ABS), Styrolmethylmethacrylate (SMMA), Styrolbutadien (SB beispielsweise BDS K-Resin von Chevron Phillips Chemical Company);
- Polyolefine wie Polypropylen (PP), Polyethylen (PE) beispielsweise auch in den Formen high density Polyethylen (HDPE) oder low density Polyethylen (LDPE);
- Polyester wie Polyethylenterephtalat (PET) in Form von säuremodifiziertem Polyethylenterephtalat (PETA) oder glykolmodifiziertem Polyethylenterephtalat (PETG) wie GN005 oder 6763 von Eastman Chemical Company, Polybutylenterephthalat (PBT), säuremodifiziertes Polycyclohexadimethanoltherastalat (PCT-A) wie BR003 von Eastman Chemical Company, glykolmodifiziertes Polycyclohexadimethanoltherastalat (PCT-G) wie DN004 von Eastman Chemical Company ;
- Cellulosederivate wie Celluloseacetat (CA), Celluloseacetobutyrat (CAB), Cellulosepropionat (CP), Celluloseacetatphtalat (CAP), Cellulosebutyrat (CB);
- Polyamide (PA) wie PA 6.6, PA 6.10, PA 6.12;
- Polymethylmethacrylat (PMMA);
- Polycarbonat (PC);
- Polyoxymethylen (POM);
- Polyvinylchlorid (PVC); und
- Polyurethan (PUR).

Beispiele aus dem Bereich der Thermoplastischen Elastomeren (TPE's) sind:
- Thermoplastische Polyurethan-Elastomere (TPE-U);
- Thermoplastische Styrol-Elastomere (TPE-S) wie beispielsweise ein Styrol-Ethylen-Butylen-Styrol-Copolymer (SEBS) oder Styrol-Butadien-Styrol-Copolymer (SBS) ;
- Thermoplastische Polyamid-Elastomere (TPE-A) wie beispielsweise Grilflex^{®} von EMS Chemie AG;
- Thermoplastische Polyolefin-Elastomere (TPE-O); und
- Thermoplastische Polyester-Elastomere (TPE-E).

Als Hartkomponente wird im Fall einer nicht transparenten Bürste bevorzugt PP, am meisten bevorzugt wird PP mit einem E-Modul von 1000 - 2400 N/mm2, vorzugsweise 1300 bis 1800 N/mm2 verwendet. Für die Gestaltung einer transparenten Bürste werden bevorzugt Polyester wie die aufgeführten BR003, CAP, PA, PMMA, SAN oder ABS als Hartkomponente verwendet.

Als Weichkomponente wird bevorzugt ein TPE-S eingesetzt. Die Shore A Härten des Weich-Kunststoffes liegen vorzugsweise unter 90 Shore A. Die Weichkomponente kann sowohl als Komponente am Griffkörper der Zahnbürste als auch als Massage- oder Reinigungselement im Zahnbürstenkopf 10 integriert werden.

Der Aufbau des Borstenfeldes ist grundsätzlich sehr variabel möglich. Im Borstenfeld können zylindrische, einseitig und doppelseitig zugespitzte Borsten 21, 22, 23 in beliebiger Weise kombiniert werden. Die Borstenbündel 20 können als Borstenbündel 20 mit höherstehenden und tieferstehenden Borstenenden in beliebiger Anzahl direkt integriert und kombiniert sein, daneben sind auch die konventionellen Formen von Borstenbündeln möglich, bei welchen alle Borsten im Bündel gleich weit hoch stehen. Im Weiteren können weichelastische Massage- und / oder Reinigungselemente im Kopfteil 10 in beliebiger Anordnung mit den obgenannten Borstenarten und Bündelarten kombiniert sein.

Die Borstenbündel 20 mit höherstehenden und tieferstehenden Borstenenden 37, 38 können beispielsweise mit konventionellen Borstenbündeln in der Form von Querreihen abwechselnd angeordnet sein, wobei die konventionellen Borstenbündel ihre Borstenenden tiefer liegend haben können als die höherstehenden Borstenenden 38. Die Borstenbündel 20 mit höherstehenden und tieferstehenden Borstenenden 37, 38 können geschlossene Konturen um andere Borstenbündel oder auch um weichelastische Massage- und / oder Reinigungselemente bilden. Beispielsweise können sie das Borstenfeld umgebend angeordnet sein.

Eine spezielle Ausgestaltungsvariante von Borstenbündeln 20 mit höherstehenden und tieferstehenden Borstenenden 37, 38 ist die Anordnung dieser Borstenbündel 20 in einem von 90° abweichenden Winkel bezüglich dem Kopfteil 10. Das heisst, es werden schräg stehende Borstenbündel 20 gebildet, die sich auch kreuzen können und auf diese Weise X-förmige Anordnungen ermöglichen. Diese sind längs und quer auf dem Bürstenkopf möglich. Zum Beispiel können auf einem Zahnbürstenkopf 10 Querreihen gestaltet werden, in welchen alle Borstenbündel 20 in dieselbe Richtung geneigt sind. Die Ausdünnung / Profilierung ist in diesem Fall in gleicher Art und Weise möglich wie für die geradestehenden Borstenbündel. Der Unterschied ergibt sich im Aussehen der Borstenbündel. Im vorliegenden Fall sind die Ebene der höherstehenden Borstenenden 37 und die Ebene der tieferstehenden Borstenenden 38 nicht mehr senkrecht zur Achse des Sacklochs 40, in welchem sie eingebracht sind beziehungsweise zur Längsachse der Borsten 21. Die Ebenen sind in diesem Fall parallel zur Kopffläche der Zahnbürste.

Eine weitere Ausgestaltungsmöglichkeit ist die variable Anordnung der Anker 45. Wird die Zahnbürste beziehungsweise der Kopfteil 10 während dem Beborstungsprozess entsprechend gedreht, so werden die Anker 45 relativ zueinander in unterschiedlichen Winkeln im Bürstenkopf fixiert. Die asymmetrische Stanzung der Borstenbündel 20, das heisst, die variable Anordnung von höherstehenden und tieferstehenden Borstenenden 37, 38 wird dadurch ermöglicht.

Eine gewisse Regel ist dennoch notwendig, damit eine Ausdünnung - wie weiter oben beschrieben - stattfinden kann; das bedeutet, die Borstenbündel 20 müssen in gewissen Querreihen angeordnet sein. Durch die variable Anordnung der Anker 45 und dementsprechend der höherstehenden Borstenenden 37 wird die Ausdünnung über das ganze Borstenfeld betrachtet weniger regelmässig beziehungsweise sind die verschiedenen Borstenbündel unterschiedlich stark ausgedünnt.

Die Alternative dazu, dass die Ankerstellungen und somit die Orientierung der Borstenbündel 20 im Borstenfeld variiert werden, ist, dass alle Borstenbündel 20 gleich orientiert sind und sich keine Spiegelung der höherstehenden Borstenenden 37 bezüglich der Längsachse 29 ergibt.

Alle Teile des Zahnbürstenkörpers, das heisst Griffteil, Halsteil 15 und Kopfteil 10 können aus einer oder mehreren Hartkomponenten und zusätzlich mit einer oder mehreren Weichkomponenten hergestellt sein. Die Weichkomponente ist jedoch optional.

Das erfindungsgemässe Herstellungsverfahren und der erfindungsgemässe Zahnbürstenkopf ist nicht nur für Handzahnbürsten geeignet, sondern auch für Vibrations-/ Schallzahnbürsten oder elektrische Zahnbürsten mit drehenden, oszillierenden, schwenkenden Kopfteilen 10 oder mit Kopfteilen 10, die in Längsrichtung eine Hin- und HerBewegung ausführen oder Kombinationen daraus.

Selbstverständlich sind die gezeigten und beschriebenen Ausgestaltungsvarianten beispielhaft und die einzelnen Ausprägungen und Elemente dieser Ausgestaltungsvarianten können mit anderen Ausgestaltungsvarianten kombiniert werden ohne den Rahmen dieser Erfindung zu verlassen.

Bei allen gezeigten Ausführungsformen bilden die Borstenbündel 20 durch das U-förmige Umbiegen beziehungsweise Falten um den betreffenden Anker 45 zwei Borstenbündelhälften 35, 36. Die Borstenbündelhälfte 36 hat jeweils - infolge des asymmetrischen Faltens - nur Borsten 21 mit tieferstehenden Borstenenden 38. Die andere Borstenbündelhälfte 35 hat jeweils Borsten 21, deren Borstenenden 37 bezüglich den Borstenenden 38 der Borstenbündelhälfte 36 höher stehen. Es können dabei alle Borstenenden 37 der Borstenbündelhälfte 35 höher stehen, wie dies bei den Ausführungsformen gemäss den Fig. 15 bis 22 vorzugsweise der Fall ist. Die Borstenbündelhälften 35 können jedoch, neben den Borsten 21 mit höherstehenden Borstenenden 37, auch solche mit tieferstehenden Borstenenden 38 aufweisen, wie dies bei den Ausführungsbeispielen gemäss den Figuren 1 bis 6 als bevorzugt gezeigt ist.

Eine Ausführungsform betrifft auch eine Zahnbürste mit einem Handgriff und einem borstentragenden Kopfteil 10, die durch einen Halsteil 15 miteinander verbunden sind, wobei das Kopfteil 10 eine Vielzahl von aus Borsten 21 bestehende, jeweils zwei Borstenbündelhälften 35, 36 bildend mittels eines Ankers 45 im Kopfteil 10 befestigte Borstenbündel 20 aufweist. Die Borstenbündel 20 sind entlang, vorzugsweise in sich geschlossenen Linien angeordnet. Die Linien verlaufen zueinander mit einem, vorzugsweise konstanten Abstand. Bei den Linien handelt es sich vorzugsweise um konzentrische Kreislinien. Die Anker 45 der Borstenbündel 20 verlaufen wenigstens annähernd, vorzugsweise genau tangential zu den Linien. Die eine Borstenbündelhälfte 35 weist relativ zu den Borstenenden 38 der anderen Borstenbündelhälfte 36 höherstehende Borstenenden 37 auf.

Dabei sind bevorzugt alle einer Linie zugeordneten Borstenbündel 20 gleich ausgerichtet; die bezüglich der Linie aussenliegende Borstenbündelhälfte 35, 36 ist jeweils jene mit den tiefer stehenden Borstenenden 38 oder jene mit den höherstehenden Borstenenden 37.

Weiter bevorzugt sind dabei die allen Linien zugeordneten Borstenbündel 20 gleich ausgerichtet; die bezüglich den Linien aussenliegenden Borstenbündelhälften 35, 36 sind jene mit den tiefer stehenden Borstenenden 38 oder jene mit den höherstehenden Borstenenden 37.

Weiter ist dabei bevorzugt, dass die jeweils einer Linie zugeordneten Borstenbündel 20 gleich ausgerichtet sind; die bezüglich der betreffenden Linie aussenliegende Borstenbündelhälfte 35 oder 36 ist jeweils jene mit den tiefer stehenden Borstenenden 38 oder jene mit den höherstehenden Borstenenden 37. Die der benachbartern Linie zugeordneten Borstenbündel 20 sind zueinander umgekehrt angeordnet. Die Borstenbündelhälften 35 beziehungsweise 36 der in radialer Richtung aufeinander folgenden Borstenbündel 20 sind somit einander zugewandt.

## Patentansprüche

1. Zahnbürste mit einem Handgriff und einem borstentragenden Kopfteil (10), die durch einen Halsteil (15) miteinander verbunden sind, wobei das Kopfteil (10) eine Vielzahl von aus Borsten (21) bestehenden, jeweils zwei Borstenbündelhälften (35, 36) bildend, mittels eines Ankers (45) im Kopfteil (10) befestigte Borstenbündel (20) aufweist, wobei mindestens zwei Borstenbündel (20) eine Borstenbündelhälfte (35) mit relativ zu den Borstenenden (38) der anderen Borstenbündelhälfte (36) höherstehenden Borstenenden (37) aufweisen, wobei die höherstehenden Borstenenden (37) innerhalb der mindestens zwei Borstenbündel (20) nicht zentrisch angeordnet sind, **dadurch gekennzeichnet, dass** die mindestens zwei Borstenbündel (20) verschiedene Längen zwischen den höherstehenden Borstenenden (37) und den tieferstehenden Borstenenden (38) aufweisen.

2. Zahnbürste gemäss Anspruch 1, **dadurch gekennzeichnet, dass** die mindestens zwei Borstenbündel (20) ab dem Austritt aus einem Sackloch (40) des Kopfteils (10) bis zu den höherstehenden Borstenenden (37) eine Länge von 9 mm bis 15 mm aufweisen.

3. Zahnbürste gemäss Anspruch 2, **dadurch gekennzeichnet, dass** die Länge 10 mm bis 12 mm beträgt.

4. Zahnbürste gemäss einem der vorhergehenden Ansprüche, **dadurch gekennzeichnet, dass** die mindestens zwei Borstenbündel (20) ab dem Austritt aus einem Sackloch (40) des Kopfteils (10) bis zu den tieferstehenden Borstenenden (38) eine Länge von 6 mm bis 11 mm aufweisen.

5. Zahnbürste gemäss Anspruch 4, **dadurch gekennzeichnet, dass** die Länge 8 mm bis 10 mm beträgt.

6. Zahnbürste gemäss einem der vorhergehenden Ansprüche, **dadurch gekennzeichnet, dass** die höherstehenden Borstenenden (37) relativ zu den tieferstehenden Borstenenden (38) 0,5 mm bis 5 mm höherstehend angeordnet sind.

7. Zahnbürste gemäss Anspruch 6, **dadurch gekennzeichnet, dass** höherstehende Anordnung 2 mm bis 3 mm beträgt.

8. Zahnbürste gemäss einem der vorhergehenden Ansprüche, **dadurch gekennzeichnet, dass** die mindestens zwei Borstenbündel (20) asymmetrisch gestanzt sind.

9. Zahnbürste gemäss einem der vorhergehenden Ansprüche, **dadurch gekennzeichnet, dass** die Borstenbündel (20) Borsten mit unterschiedlichen Borstenenden umfassen, wobei neben zylindrischen Borsten mit abgerundeten Enden auch Borsten mit zugespitzten Enden vorhanden sind.

10. Zahnbürste gemäss einem der vorhergehenden Ansprüche, **dadurch gekennzeichnet, dass** die Borsten der Borstenbündel (20) einseitig zugespitzte Borsten sind.

11. Zahnbürste gemäss Anspruch 10, **dadurch gekennzeichnet, dass** die zugespitzten Enden der zugespitzten Borsten die höherstehenden Borstenenden (37) bilden.

12. Zahnbürste gemäss einem der vorhergehenden Ansprüche, **dadurch gekennzeichnet, dass** die mindestens zwei Borstenbündel (20) spiegelbildlich zu einer Längsmittelebene (30) der Zahnbürste angeordnet sind.

13. Zahnbürste gemäss einem der vorhergehenden Ansprüche, **dadurch gekennzeichnet, dass** die Anker (45) mittels denen die Borstenbündel (20) im Kopfteil befestigt sind, die gleiche Orientierung aufweisen.

14. Zahnbürste gemäss einem der vorhergehenden Ansprüche, **dadurch gekennzeichnet, dass** die Borstenbündelhälften (35) mit den höherstehenden Borstenenden (37) auf derselben Seite des Ankers (45) angeordnet sind.

15. Verfahren zur Herstellung einer Zahnbürste mit einem Handgriff und einem borstentragenden Kopfteil (10), die durch einen Halsteil (15) miteinander verbunden sind, wobei im Kopfteil (10) aus einer Vielzahl von Borsten (21) bestehende Borstenbündel (20), jeweils zwei Borstenbündelhälften (35, 36) bildend, mittels eines Ankers (45) in Sacklöchern (40) des Kopfteils (10) befestigt werden, wobei die Borsten (21) von mindestens zwei Borstenbündeln (20) asymmetrisch um den Anker (45) gefaltet werden, wodurch eine Borstenbündelhälfte (35) mit relativ zu den Borstenenden (38) der anderen Borstenbündelhälfte (36) höherstehenden Borstenenden (37) gebildet wird, wobei die höherstehenden Borstenenden (37) innerhalb der mindestens zwei Borstenbündel (20) nicht zentrisch angeordnet werden, **dadurch gekennzeichnet, dass** die mindestens zwei Borstenbündel (20) mit verschiedenen Längen zwischen den höherstehenden Borstenenden (37) und den tieferstehenden Borstenenden (38) ausgestaltet werden.

16. Verfahren gemäss Anspruch 15, **dadurch gekennzeichnet, dass** als Borsten (21) einseitig zugespitzte Borsten (23) verwendet werden.

17. Verfahren gemäss Anspruch 15 oder 16, **dadurch gekennzeichnet, dass** die Borsten (21, 23) an ihren Borstenenden (37, 38) vor dem Einbringen in die Sacklöcher (40) des Kopfteils (10) zugespitzt und/oder gerundet werden.

18. Verfahren gemäss einem der Ansprüche 15 bis 17, **dadurch gekennzeichnet, dass** das Kopfteil (10) mittels Spritzgusstechnik mit mindestens einer weichelastischen Struktur versehen wird, welche in Form eines Reinigungs- und Massageelements ausgestaltet wird.

## Claims

1. Toothbrush with a handle and a bristle-carrying head part (10), which are connected to each other by a neck part (15), wherein the head part (10) has a multiplicity of tufts of bristles (20) consisting of bristles (21), respectively forming two bristle tuft halves (35, 36) and fastened in the head part (10) by means of an anchor (45), wherein at least two tufts of bristles (20) have a bristle tuft half (35) with bristle ends (37) standing up higher in relation to the bristle ends (38) of the other bristle tuft half (36), wherein the higher bristle ends (37) within the at least two tufts of bristles (20) are not arranged centrally, **characterized in that** the at least two tufts of bristles (20) have different lengths between the higher bristle ends (37) and the lower bristle ends (38).

2. Toothbrush according to Claim 1, **characterized in that** the at least two tufts of bristles (20) have a length of 9 mm to 15 mm from the emergence from a blind hole (40) in the head part (10) to the higher bristle ends (37).

3. Toothbrush according to Claim 2, **characterized in that** the length amounts to 10 mm to 12 mm.

4. Toothbrush according to one of the preceding claims, **characterized in that** the at least two tufts of bristles (20) have a length of 6 mm to 11 mm from the emergence from a blind hole (40) in the head part (10) to the lower bristle ends (38).

5. Toothbrush according to Claim 4, **characterized in that** the length amounts to 8 mm to 10 mm.

6. Toothbrush according to one of the preceding claims, **characterized in that** the higher bristle ends (37) are arranged 0.5 mm to 5 mm higher in relation to the lower bristle ends (38).

7. Toothbrush according to Claim 6, **characterized in that** the higher arrangement amounts to 2 mm to 3 mm.

8. Toothbrush according to one of the preceding claims, **characterized in that** the at least two tufts of bristles (20) are punched asymmetrically.

9. Toothbrush according to one of the preceding claims, **characterized in that** the tufts of bristles (20) comprise bristles with different bristle ends, wherein, in addition to cylindrical bristles with rounded ends, bristles with pointed ends are also present.

10. Toothbrush according to one of the preceding claims, **characterized in that** the bristles of the tufts of bristles (20) are bristles that are pointed at one end.

11. Toothbrush according to Claim 10, **characterized in that** the pointed ends of the pointed bristles form the higher bristle ends (37).

12. Toothbrush according to one of the preceding claims, **characterized in that** the at least two tufts of bristles (20) are arranged mirror-symmetrically with respect to a longitudinal centre plane (30) of the toothbrush.

13. Toothbrush according to one of the preceding claims, **characterized in that** the anchors (45) by means of which the tufts of bristles (20) are fastened in the head part have the same orientation.

14. Toothbrush according to one of the preceding claims, **characterized in that** the bristle tuft halves (35) with the higher bristle ends (37) are arranged on the same side of the anchor (45).

15. Method of producing a toothbrush with a handle and a bristle-carrying head part (10), which are connected to each other by a neck part (15), wherein, in the head part (10), tufts of bristles (20) consisting of a multiplicity of bristles (21) and respectively forming two bristle tuft halves (35, 36) are fastened in blind holes (40) in the head part (10) by means of an anchor (45), wherein the bristles (21) of at least two tufts of bristles (20) are folded asymmetrically about the anchor (45), as a result of which one bristle tuft half (35) which has bristle ends (37) standing up higher in relation to the bristle ends (38) of the other bristle tuft half (36) is formed, wherein the higher bristle ends (37) within the at least two tufts of bristles (20) are not arranged centrally, **characterized in that** the at least two tufts of bristles (20) are configured with different lengths between the higher bristle ends (37) and the lower bristle ends (38).

16. Method according to Claim 15, **characterized in that** bristles (23) that are pointed at one end are used as bristles (21).

17. Method according to Claim 15 or 16, **characterized in that** the bristles (21, 23) are pointed and/or rounded at their bristle ends (37, 38) before they are introduced into the blind holes (40) in the head part (10) .

18. Method according to one of Claims 15 to 17, **characterized in that** the head part (10) is provided with at least one soft elastic structure configured in the form of a cleaning and massage element by means of injection moulding technology.

## Revendications

1. Brosse à dents présentant une poignée et une partie de tête (10) porte-poils de brosse reliées l'une à l'autre par une partie de col (15), la partie de tête (10) présentant plusieurs faisceaux (20) de poils de brosse constitués de poils (21), formant chacun deux moitiés (35, 36) de faisceaux de poils de brosse, fixés dans la partie de tête (10) au moyen d'un ancrage (45), au moins deux faisceaux (20) de poils de brosse présentant une moitié (35) de faisceau de poils de brosse dont les extrémités (37) des poils de brosse sont situées plus haut que les extrémités (38) des poils de brosse de l'autre moitié (36) de faisceau de poils de brosse, les extrémités (37) des poils de brosse situées plus haut n'étant pas agencées au centre dans les au moins deux faisceaux (20) de poils de brosse, **caractérisée en ce que** les au moins deux faisceaux (20) de poils de brosse présentent différentes longueurs entre les extrémités (37) des poils de brosse situées plus haut et les extrémités (38) des poils de brosse situées plus bas.

2. Brosse à dents selon la revendication 1, **caractérisée en ce que** les au moins deux faisceaux (20) de poils de brosse présentent à partir de la sortie d'un trou aveugle (40) de la partie de tête (10) jusqu'aux extrémités (37) des poils de brosse situées plus haut une longueur de 9 mm à 15 mm.

3. Brosse à dents selon la revendication 2, **caractérisée en ce que** la longueur est de 10 mm à 12 mm.

4. Brosse à dents selon l'une quelconque des revendications précédentes, **caractérisée en ce que** les au moins deux faisceaux (20) de poils de brosse présentent à partir de la sortie d'un trou aveugle (40) de la partie de tête (10) jusqu'aux extrémités (38) des poils de brosse situées plus bas une longueur de 6 mm à 11 mm.

5. Brosse à dents selon la revendication 4, **caractérisée en ce que** la longueur est de 8 mm à 10 mm.

6. Brosse à dents selon l'une quelconque des revendications précédentes, **caractérisée en ce que** les extrémités (37) des poils de brosse situées plus haut sont agencées 0,5 mm à 5 mm plus haut que les extrémités (38) des poils de brosse situées plus bas.

7. Brosse à dents selon la revendication 6, **caractérisée en ce que** l'agencement plus haut est de 2 mm à 3 mm.

8. Brosse à dents selon l'une quelconque des revendications précédentes, **caractérisée en ce que** les au moins deux faisceaux (20) de poils de brosse sont estampés de manière asymétrique.

9. Brosse à dents selon l'une quelconque des revendications précédentes, **caractérisée en ce que** les faisceaux (20) de poils de brosse comprennent des poils de brosse ayant des extrémités de poils de brosse différentes, outre des poils de brosse cylindriques ayant des extrémités arrondies, des poils de brosse ayant des extrémités pointues étant également présents.

10. Brosse à dents selon l'une quelconque des revendications précédentes, **caractérisée en ce que** les poils de brosse des faisceaux (20) de poils de brosse sont des poils de brosse pointus d'un côté.

11. Brosse à dents selon la revendication 10, **caractérisée en ce que** les extrémités pointues des poils de brosse pointus forment les extrémités (37) de poils de brosse situées plus haut.

12. Brosse à dents selon l'une quelconque des revendications précédentes, **caractérisée en ce que** les au moins deux faisceaux (20) de poils de brosse sont agencés en miroir par rapport à un plan médian longitudinal (30) de la brosse à dents.

13. Brosse à dents selon l'une quelconque des revendications précédentes, **caractérisée en ce que** les ancrages (45) au moyen desquels les faisceaux (20) de poils de brosse sont fixés dans la partie de tête présentent la même orientation.

14. Brosse à dents selon l'une quelconque des revendications précédentes, **caractérisée en ce que** les moitiés (35) de faisceau de poils de brosse dont les extrémités (37) des poils de brosse sont situées plus haut sont agencées sur le même côté de l'ancrage (45).

15. Procédé de fabrication d'une brosse à dents présentant une poignée et une partie de tête (10) porte-poils de brosse reliées l'une à l'autre par une partie de col (15), dans lequel des faisceaux (20) de poils de brosse constitués de plusieurs poils (21) sont fixés dans la partie de tête (10) dans des trous aveugles (40) de la partie de tête (10) au moyen d'un ancrage (45) en formant chaque fois deux moitiés (35, 36) de faisceau de poils de brosse, les poils de brosse (21) d'au moins deux faisceaux (20) de poils de brosse étant pliés de manière asymétrique autour de l'ancrage (45), moyennant quoi une moitié (35) de faisceau de poils de brosse dont les extrémités (37) des poils de brosse sont situées plus haut que les extrémités (38) des poils de brosse de l'autre moitié (36) de faisceau de poils de brosse est formée, les extrémités (37) des poils de brosse situées plus haut n'étant pas agencées au centre dans les au moins deux faisceaux (20) de poils de brosse, **caractérisé en ce que** les au moins deux faisceaux (20) de poils de brosse sont configurés avec différentes longueurs entre les extrémités (37) des poils de brosse situées plus haut et les extrémités (38) des poils de brosse situées plus bas.

16. Procédé selon la revendication 15, **caractérisé en ce que** des poils de brosse (23) pointus d'un côté sont utilisés en tant que poils de brosse (21).

17. Procédé selon la revendication 15 ou 16, **caractérisé en ce que** les poils (21, 23) sont taillés en pointe et/ou arrondis à leurs extrémités (37, 38) de poils de brosse avant d'être insérés dans les trous aveugles (40) de la partie de tête (10).

18. Procédé selon l'une quelconque des revendications 15 à 17, **caractérisé en ce que** la partie de tête (10) est munie au moyen d'une technique de moulage par injection d'au moins une structure élastique souple qui est conçue sous la forme d'un élément de nettoyage et de massage.
